# EUROPEAN PATENT APPLICATION

(11) **EP 4 404 379 A1**
(43) Date of publication of application: **24.07.2024**
(21) Application number: 22877963.3
(22) Date of filing: 08.10.2022
(51) Int. Cl.: H01Q 1/42, B32B 27/36, B32B 27/32, B32B 27/06, B32B 37/10

(54) **RADOME, AND STACKED PLATE FOR RADOME, COMPOSITE PLATE AND FABRICATION METHOD**

(30) Priority: 09.10.2021 CN 202111179971
(71) Applicant: Huawei Technologies Co., Ltd., Shenzhen, Guangdong 518129 (CN)
(72) Inventor: LI, Liangyuan, Shenzhen, Guangdong 518129 (CN); SHENG, Kai, Shenzhen, Guangdong 518129 (CN)
(74) Representative: Gill Jennings & Every LLP
(86) International application number: PCT/CN2022/123897
(87) International publication number: WO 2023/056949

(57) **Abstract**

A radome, a stacked plate and a composite plate that are used for the radome, and a manufacturing method are provided. The radome is manufactured by performing softening and hot roll pressing on a composite plate. A stacked plate forming the composite plate includes a first layer, a second layer, and a third layer that are sequentially stacked. The first layer and the third layer are of a same structure and are made of a same material. The first layer and the third layer each are formed by compounding a continuous-fiber-woven object and thermoplastic resin. The second layer is made of a foam material.

## Description

This application claims priority to Chinese Patent Application No. 202111179971.3, filed with the China National Intellectual Property Administration on October 9, 2021 and entitled "RADOME, STACKED PLATE AND COMPOSITE PLATE THAT ARE USED FOR RADOME, AND MANUFACTURING METHOD", which is incorporated herein by reference in its entirety.

### TECHNICAL FIELD

This application relates to the field of polymer materials, and in particular, to a radome, a stacked plate and a composite plate that are used for the radome, and a manufacturing method.

### BACKGROUND

A radome is a structure that protects an antenna system from being affected by an external environment. With development of passive antennas from single-band and multi-band to full-band, a passive multi-band or full-band antenna is integrated with an MM active antenna. As a result, a weight of an entire antenna 1 greatly increases, and even reaches 50 kg or more.

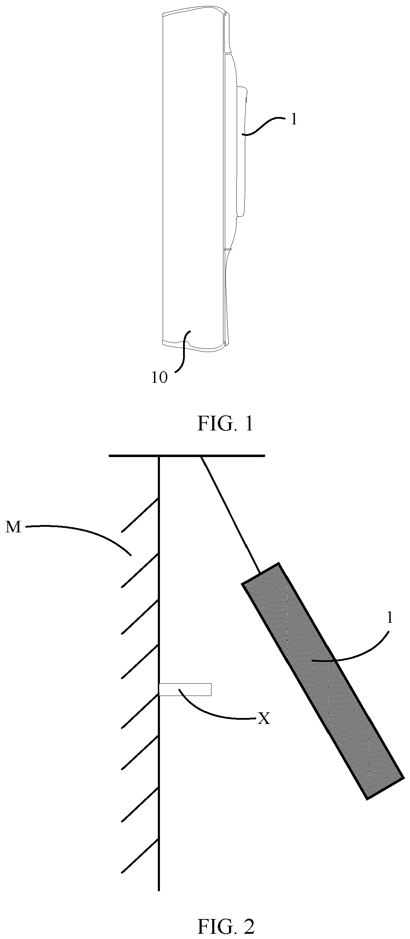

Such the heavy antenna may be subject to impact such as vibration impact, falling impact, and the like in a process of transporting or carrying the bare antenna, may be stepped on at a mounting site, and may hit a tower due to swing in a mounting and hoisting process. To protect the antenna from being subject to the external impact, as shown in FIG. 1, a radome 10 needs to be disposed outside the antenna 1 to resist the impact.

### SUMMARY

In view of this, this application provides a radome, a stacked plate and a composite plate that are used for the radome, and a manufacturing method, to resolve the foregoing technical problems. The technical solutions are as follows.

According to a first aspect, this application provides a composite plate used for a radome. The composite plate includes a middle layer and a surface layer combined with the middle layer, the surface layer includes first fibers and thermoplastic resin filled between the first fibers, the surface layer and the middle layer are arranged in a first direction, and the first direction is a thickness direction of the composite plate. It may be understood that the thickness direction is a direction in which an inner surface of the radome made of the composite plate points to an outer surface of the radome, or a direction in which an outer surface of the radome points to an inner surface of the radome. The thermoplastic resin is filled between the first fibers, so that compactness of the surface layer can be increased, and impact resistance performance of the surface layer can be improved. In this way, a radome with stronger impact resistance performance is manufactured.

With reference to the first aspect and a possible implementation, in a possible implementation of the first aspect, the composite plate is of a sandwich structure, and the sandwich structure is an A-type sandwich structure or a C-type sandwich structure. Specifically, in a possible implementation, the composite plate includes a middle layer and a first surface layer and a second surface layer that are combined with the middle layer, the first surface layer, the middle layer, and the second surface layer are sequentially arranged based on the A-type sandwich structure, and the first surface layer and the second surface layer are made of a same material and are of a same structure. In another possible implementation, the composite plate includes a first surface layer, a third layer, a middle layer, a fourth layer, and a second surface layer that are sequentially arranged based on the C-type sandwich structure, the middle layer is combined with the third layer and the fourth layer, and the first surface layer, the third layer, the fourth layer, and the second surface layer are made of a same material and are of a same structure.

With reference to the first aspect, in a possible implementation of the first aspect, a melting point of the first fiber is higher than a melting point of the thermoplastic resin. In this way, when hot pressing is performed on a stacked plate forming the composite plate, the thermoplastic resin is melted by heat, but the first fibers are not melted, so that the melted thermoplastic resin can be filled between the first fibers. It may be understood that, in a possible implementation, the first fiber is a high melting point fiber. The high melting point fiber is relative to a low melting point fiber. A specific temperature value of the high melting point fiber is related to a process of manufacturing the composite plate. However, it should be understood that regardless of which manufacturing process is used, when the composite plate is formed through heating, a temperature reached through heating should not make the high melting point fiber be melted.

In addition, it should be noted that, generally, a melting point of the low melting point fiber ranges from 110°C to 150°C. Therefore, a melting point of the high melting point fiber only needs to be higher than the melting point of the low melting point fiber. In another possible implementation, a melting point range of the low melting point fiber may alternatively be another temperature range. Correspondingly, a melting point range of the first fiber may alternatively be another temperature range. For example, melting points of some inorganic fibers may reach more than 1000°C. It should be understood that a specific value of the melting point of the first fiber is not limited in this application.

With reference to the first aspect and the possible implementations, in a possible implementation of the first aspect, the thermoplastic resin in the surface layer is made of a same material as the middle layer. In this way, the surface layer can be better combined with the middle layer without a need of using an additional adhesive to bond the surface layer and the middle layer. This saves materials to some extent, improves a rate of combination of the surface layer and the middle layer, and further improves impact resistance performance of a finally manufactured composite plate. It may be understood that, in another possible implementation, the material of the middle layer may alternatively be a material whose performance and melting point are close to those of the thermoplastic resin in the surface layer. This is not specifically limited herein. This is also conducive to combination of the surface layer and the middle layer.

With reference to the first aspect and the possible implementation, in a possible implementation of the first aspect, the middle layer is made of a thermoplastic foam material. The middle layer is made of the foam material, so that an overall weight of the composite plate can be reduced, and lightweight of the composite plate can be further implemented.

With reference to the first aspect and the possible implementations, in a possible implementation of the first aspect, the first fiber in the surface layer is of a woven fiber structure, and in the surface layer, the thermoplastic resin is filled in a gap in the woven fiber structure. It may be understood that the woven structure can dissipate stress caused by external impact. Therefore, the first fiber in the surface layer uses the woven fiber structure, so that impact resistance performance of the surface layer can be improved. The thermoplastic resin is filled in the gap in the woven fiber structure, so that compactness of the surface layer is further improved, and impact resistance performance of the surface layer is further improved.

In some possible implementations, a weaving manner of the woven fiber structure includes any one of plain weaving, square plain weaving, rib weaving, twill weaving, and satin weaving. It should be understood that a specific weaving manner of the woven fiber structure is not limited in this application.

With reference to the first aspect and the possible implementations, in a possible implementation of the first aspect, the first fibers in the surface layer include inorganic fibers and/or organic fibers.

With reference to the first aspect and the possible implementations, in a possible implementation of the first aspect, the inorganic fibers in the surface layer are arranged in an unordered manner. In comparison with a structure formed through weaving according to a specific rule, this manner can better dissipate stress caused by external impact, so that impact resistance performance of the surface layer is improved.

With reference to the first aspect and the possible implementations, in a possible implementation of the first aspect, the inorganic fibers in the surface layer are glass fibers, and the glass fibers are arranged in an unordered manner to form a glass mat.

With reference to the first aspect and the possible implementations, in a possible implementation of the first aspect, the inorganic fiber in the surface layer includes at least one of a glass fiber, a basalt fiber, an andesite fiber, an aluminum silicate fiber, a boron nitride fiber, an aluminum oxide fiber, and a quartz fiber. It should be understood that neither a specific form nor a specific type of the inorganic fiber is limited in this application.

With reference to the first aspect and the possible implementations, in a possible implementation of the first aspect, the organic fiber in the surface layer includes at least one of a polypropylene fiber, a polybutylene terephthalate fiber, a polyethylene fiber, a polyethylene glycol terephthalate fiber, and a polytrimethylene terephthalate fiber. It should be understood that neither a specific form nor a specific type of the organic fiber is limited in this application.

With reference to the first aspect and the possible implementations, in a possible implementation of the first aspect, the first fibers in the surface layer include a plurality of fiber layers arranged in the first direction, and an included angle between fibers in two fiber layers of the plurality of fiber layers is a first preset angle. It should be understood that the included angle between the fibers in the two fiber layers of the plurality of fiber layers is arranged based on the first preset angle, so that the two fiber layers are staggered. This improves impact resistance performance of the surface layer. Therefore, a value of the first preset angle is not limited in this application except that the value of the first preset angle in this application cannot make the fibers in the two fiber layers be parallel.

With reference to the first aspect and the possible implementations, in a possible implementation of the first aspect, the first preset angle includes at least one of 30°, 45°, and 60°. In addition, in this application, the value of the first preset angle may alternatively be another value that is not 0. This is not specifically limited in this application.

With reference to the first aspect and the possible implementations, in a possible implementation of the first aspect, the composite plate further includes a weather-resistant coloring layer, and the weather-resistant coloring layer is located on a side that is of the surface layer and that is away from the middle layer. It may be understood that, to improve aesthetics and weather resistance of the composite plate, the weather-resistant coloring layer may be disposed on the surface layer of the composite plate.

In addition, in some possible implementations, the weather-resistant coloring layer and the surface layer may be integrally formed, to save materials.

With reference to the first aspect and the possible implementations, in a possible implementation of the first aspect, the thermoplastic resin includes at least one of polypropylene, polyethylene, polyvinyl chloride, polybutylene terephthalate, polyethylene glycol terephthalate, polytrimethylene terephthalate, polycarbonate, and polyphenylene oxide. It should be understood that neither a specific form nor a specific type of the thermoplastic resin is limited in this application.

According to a second aspect, this application provides a stacked plate. The stacked plate is used to form the composite plate according to any one of the first aspect and the possible implementations of the first aspect. The stacked plate includes at least two first layers and at least one second layer that are stacked, the first layer is formed by compounding first fibers and thermoplastic resin, the at least two first layers and the at least one second layer are arranged in a staggered manner in a second direction, the second direction is a thickness direction of the stacked plate, and the second direction is parallel to the first direction.

It should be noted that the thickness direction is a direction in which an inner surface of a radome made of the stacked plate points to an outer surface of the radome, or a direction in which an outer surface of a radome points to an inner surface of the radome.

It should be further noted that, in the second aspect, for beneficial effects of a structure and a material similar to those in the first aspect, refer to the related descriptions of the first aspect. Details are not described herein again.

In a possible implementation, the two first layers respectively form two surface layers: upper and lower surface layers of the stacked plate, that is, the first layer and a third layer; and the second layer forms a middle layer of the stacked plate. In a possible implementation, the second layer is made of a foam plate. A density of the second layer ranges from 0.15 g/m³ to 1.4 g/m³, preferably 0.4 to 1.0 g/m³. A thickness of the second layer ranges from 0.5 mm to 3 mm. Further, in a possible implementation, a density of the second layer of foam plate is 0.4 g/cm³, and a thickness of the second layer of foam plate is 1 mm, to manufacture a radome that can better meet a lightweight requirement and an impact resistance performance requirement.

With reference to the second aspect, in a possible implementation of the second aspect, the thermoplastic resin includes second fibers, the first layer includes a woven structure formed by weaving composite fibers formed by compounding the first fibers and the second fibers, and a melting point of the first fiber is higher than a melting point of the second fiber. In this way, when hot pressing is performed on the stacked plate, the second fibers in the first layer can be melted and filled in a gap of a woven structure formed by the first fibers, to increase compactness of the first layer. This improves impact resistance performance of the first layer.

With reference to the second aspect and the possible implementation, in a possible implementation of the second aspect, the first fibers include inorganic fibers and/or organic fibers.

With reference to the second aspect and the possible implementation, in a possible implementation of the second aspect, the first layer includes a woven structure formed by weaving composite material fibers. The composite material fiber includes: a kernel structure, where the kernel structure is made of a first organic material; and a shell structure disposed around the kernel structure, where the shell structure is made of a second organic material. A melting point of the first organic material is higher than a melting point of the second organic material. It may be understood that, in some possible implementations, composite material fibers may alternatively be used to form a woven structure. The composite material fiber includes a kernel structure made of a first organic material and a shell structure made of a second organic material, and a melting point of the first organic material is higher than a melting point of the second organic material. In this way, when hot pressing is performed on the woven structure made of the composite material fibers, the shell structure made of the second organic material can be melted and filled in a gap of the woven structure, to increase compactness of the first layer. This improves impact resistance performance of the first layer. In some possible implementations, a surface density of the first layer formed by weaving the composite material fibers is 450 g/m².

With reference to the second aspect and the possible implementations, in a possible implementation of the second aspect, the first fiber in the first layer is a unidirectional continuous fiber, the first layer includes a plurality of layers of prepreg tapes, the prepreg tape is a unidirectional tape formed after the unidirectional continuous fiber is wrapped by the thermoplastic resin, and an included angle between two layers of prepreg tapes of the plurality of layers of prepreg tapes is a second preset angle. It may be understood that a length of the unidirectional continuous fiber is greater than a length of a common unidirectional fiber, and the used unidirectional continuous fiber can make the prepreg tape formed by the unidirectional continuous fiber and the thermoplastic resin have better extensibility. However, this does not constitute a limitation on a form of a type of the first fiber in this application. In another possible implementation, a unidirectional fiber of another length may alternatively be used. This is not limited in this application.

With reference to the second aspect and the possible implementations, in a possible implementation of the second aspect, the second preset angle includes at least one of 30°, 45°, and 60°. In addition, in this application, a value of the second preset angle may alternatively be another value that is not 0. This is not specifically limited in this application.

In a possible implementation, that an included angle between two layers of prepreg tapes of the plurality of layers of prepreg tapes is a second preset angle may be as follows: An included angle between two adjacent layers of prepreg tapes of the plurality of layers of prepreg tapes is the second preset angle, or an included angle between any two layers of prepreg tapes of the plurality of layers of prepreg tapes is the second preset angle. This is not limited in this application. In another possible implementation, an included angle between two layers of prepreg tapes of the plurality of layers of prepreg tapes may be a second preset angle with a different value. For example, it is assumed that there are 1^{st}, 2^{nd}, 3^{rd}, and 4^{th} to 6^{th} layers of prepreg tapes, an included angle between the 1^{st} layer of prepreg tape and the 2^{nd} layer of prepreg tape may be 45°, and an included angle between the 3^{rd} layer of prepreg tape and the 4^{th} layer of prepreg tape may be 60° or the like. This is not limited in this application, either.

With reference to the second aspect and the possible implementations, in a possible implementation of the second aspect, the thermoplastic resin includes a thermoplastic resin film and/or thermoplastic resin powder. It may be understood that, in a possible implementation, the thermoplastic resin may be in a form of a film or powder. When the thermoplastic resin is in the form of a film, there may be one layer of thermoplastic resin film, and the layer of thermoplastic resin film is laid on a side that is of the first layer and that is away from the second layer. When hot pressing is performed on the stacked plate, the thermoplastic resin film is melted, to be better compounded with the first fiber to form the first layer. In another possible implementation, there may alternatively be two layers of thermoplastic resin films, one layer is laid on a side that is of the first layer and that is away from the second layer, and the other layer is laid on a side that is of the first layer and that is close to the second layer. It should be understood that a relative position relationship between the thermoplastic resin film and the first layer is not limited in this application.

According to a third aspect, this application provides a method for manufacturing the composite plate according to any one of the first aspect and the possible implementations of the first aspect. The method includes: continually performing hot pressing on the first layer and the second layer in the stacked plate according to any one of the second aspect and the possible implementations of the second aspect by using a double steel tape or a double Teflon tape at a preset temperature, to form the composite plate through compounding. In a possible implementation, a preset temperature range is 170°C to 240°C. To be specific, hot pressing is performed on the first layer and the second layer in the stacked plate according to any one of the second aspect and the possible implementations of the second aspect by using the double steel tape or the double Teflon tape at 170°C to 240°C, to form the composite plate.

It should be understood that setting of the preset temperature is related to a specific manufacturing process. 170°C to 240°C in the foregoing are merely an example. In another possible implementation, the preset temperature range may be another range. This is not limited in this application.

According to a fourth aspect, this application provides a method for manufacturing the composite plate according to any one of the first aspect and the possible implementations of the first aspect. The method includes: performing hot pressing on the first layer in the stacked plate according to any one of the second aspect and the possible implementations of the second aspect by using a double steel tape or a double Teflon tape at a preset temperature, to form a third layer; and stacking the third layer and the second layer in a staggered manner, and performing hot pressing, by using the double steel tape or the double Teflon tape at the preset temperature, on the third layer and the second layer that are stacked in a staggered manner, to form the composite plate through compounding. In a possible implementation, a preset temperature range is 170°C to 240°C. To be specific, hot pressing is performed on the first layer in the stacked plate according to any one of the second aspect and the possible implementations of the second aspect by using the double steel tape or the double Teflon tape at 170°C to 240°C, to form the third layer; and then the third layer and the second layer are stacked in a staggered manner, and hot pressing is performed on the second layer and the third layer by using the double steel tape or the double Teflon tape at 170°C to 240°C, to form the composite plate through compounding. It should also be understood that setting of the preset temperature is related to a specific manufacturing process. 170°C to 240°C in the foregoing are merely an example. In another possible implementation, the preset temperature range may be another range. This is not limited in this application.

According to a fifth aspect, this application provides a radome. The radome is manufactured by using the composite plate according to any one of the first aspect and the possible implementations of the first aspect, and specifically, is manufactured by using the composite plate according to any one of the first aspect and the possible implementations of the first aspect through hot pressing or compression molding. The radome includes a middle layer and a surface layer combined with the middle layer, and the surface layer includes first fibers and thermoplastic resin filled between the first fibers. In a possible implementation, the method is as follows: continually heating the composite plate according to any one of the first aspect and the possible implementations of the first aspect at 190°C to 240°C for 1 min to 3 min, to soften the composite plate; and performing roll pressing or compression molding on the composite plate to manufacture the radome.

With reference to the fifth aspect, in a possible implementation of the fifth aspect, the thermoplastic resin in the surface layer is made of a same material as the middle layer.

With reference to the fifth aspect and the possible implementation, in another possible implementation of the fifth aspect, the middle layer is made of a thermoplastic foam material.

With reference to the fifth aspect and the possible implementations, in another possible implementation of the fifth aspect, the radome uses a sandwich structure, and the sandwich structure is an A-type sandwich structure or a C-type sandwich structure.

According to a sixth aspect, this application provides a radome. The radome is manufactured by using the stacked plate according to any one of the second aspect and the possible implementations of the second aspect. Specifically, a method for manufacturing the radome includes: continually performing hot pressing on the stacked plate according to any one of the second aspect and the possible implementations of the second aspect by using a double steel tape or a double Teflon tape at a preset temperature, to form a composite plate through compounding; and performing hot pressing or compression molding on the composite plate to manufacture the radome, where the radome includes a middle layer and a surface layer combined with the middle layer, and the surface layer includes first fibers and thermoplastic resin filled between the first fibers.

### BRIEF DESCRIPTION OF DRAWINGS

FIG. 1 is a schematic diagram of examples of positions of an antenna and a radome according to some embodiments;
FIG. 2 is a schematic diagram of an example of a scenario of hoisting an antenna according to some embodiments;
FIG. 3(A) is a schematic diagram of an example of an impact test according to some embodiments;
FIG. 3(B) is a schematic diagram of an example of a structure of an impact hammer according to some embodiments;
FIG. 4 is a schematic diagram of an example of a layer structure of a fiberglass radome according to some embodiments;
FIG. 5 is a schematic flowchart of an example of a process of manufacturing a fiberglass radome according to some embodiments;
FIG. 6 is a schematic diagram of an example of a layer structure of a fiberglass radome according to some embodiments;
FIG. 7 is a schematic diagram of an example of a layer structure of a radome according to some embodiments;
FIG. 8(A) is a schematic diagram of a prepreg 101-1 for forming a surface layer of a radome according to some embodiments;
FIG. 8(B) is a schematic diagram of a prepreg 101-2 for forming a surface layer of a radome according to some other embodiments;
FIG. 8(C) is a schematic diagram of a prepreg 101-3 for forming a surface layer of a radome according to still some other embodiments;
FIG. 9 is a schematic diagram of a structure of a radome according to some embodiments;
FIG. 10 is a flowchart of an example of a process of manufacturing a radome according to some embodiments;
FIG. 11(A) is a schematic diagram of a structure of a fiber according to some embodiments;
FIG. 11(B) is a partial enlarged view of a structure, in a Pa area in FIG. 8, of a plate that is before molding and that is for manufacturing a radome according to some embodiments;
FIG. 11(C) is a partial enlarged view of a structure, in a Pb area in FIG. 8, of a plate that is before molding and that is for manufacturing a radome according to some embodiments;
FIG. 11(D) is a schematic diagram of a structure of another fiber according to some embodiments;
FIG. 12 is a flowchart of an example of a process of manufacturing a radome according to some embodiments;
FIG. 13 is a schematic diagram of an example of a layer structure of a radome according to some embodiments;
FIG. 14 is a schematic diagram of a surface situation of a radome after an impact test in FIG. 12;
FIG. 15 is a schematic diagram of an example of a layer structure of a radome according to some embodiments;
FIG. 16(A) is a schematic diagram of an example of a structure of a fiber according to some other embodiments;
FIG. 16(B) is a partial enlarged view of a structure, in a Pa area in FIG. 8, of a plate that is before molding and that is for manufacturing a radome according to some other embodiments;
FIG. 16(C) is a partial enlarged view of a structure, in a Pb area in FIG. 8, of a plate that is before molding and that is for manufacturing a radome according to some other embodiments;
FIG. 17(A) is a partial enlarged view of a structure, in a Pa area in FIG. 10, of a plate that is before molding and that is for manufacturing a radome according to some embodiments;
FIG. 17(B) is a partial enlarged view of a structure, in a Pb area in FIG. 10, of a plate that is after molding and that is for manufacturing a radome according to some other embodiments;
FIG. 17(C) is a partial enlarged view of another structure, in a Pa area in FIG. 10, of a plate that is before molding and that is for manufacturing a radome according to still some other embodiments;
FIG. 18(A) is a partial enlarged view of a structure, in a Pa area in FIG. 10, of a first surface layer before molding according to still some other embodiments;
FIG. 18(B) is a partial enlarged view of a structure, in a Pa area in FIG. 10, of a first surface layer after preliminary molding according to still some other embodiments;
FIG. 18(C) is a partial enlarged view of a structure, in a Pa area in FIG. 10, of a plate that is before molding and that is for manufacturing a radome according to still some other embodiments;
FIG. 18(D) is a partial enlarged view of a structure, in a Pb area in FIG. 10, of a plate that is after molding and that is for manufacturing a radome according to still some other embodiments;
FIG. 19(A) is a partial enlarged view of a structure, in a Pa area in FIG. 10, of a plate that is before molding and that is for manufacturing a radome according to yet some other embodiments;
FIG. 19(B) is a partial enlarged view of a structure, in a Pb area in FIG. 10, of a plate that is after molding and that is for manufacturing a radome according to yet some other embodiments;
FIG. 20(A) is a partial enlarged view of a structure, in a Pa area in FIG. 10, of a plate that is before molding and that is for manufacturing a radome according to still yet some other embodiments;
FIG. 20(B) is a partial enlarged view of a structure, in a Pb area in FIG. 10, of a plate that is after molding and that is for manufacturing a radome according to still yet some other embodiments;
FIG. 21(A) is a partial enlarged view of a structure, in a Pa area in FIG. 10, of a plate that is before molding and that is for manufacturing a radome according to still yet some other embodiments; and
FIG. 21(B) is a partial enlarged view of a structure, in a Pb area in FIG. 10, of a plate that is after molding and that is for manufacturing a radome according to still yet some other embodiments.

### Reference numerals:

1: antenna;
10: radome; 1a: stacked plate; 1b: composite plate;
101: first layer; 102: second layer;
103: third layer;
104: weather-resistant coloring layer;
100: first surface layer;
200: middle layer;
300: second surface layer;
21: first yarn wheel;
22: second yarn wheel;
23: glue groove;
24: guide plate;
25: mold;
3: impact hammer;
31: end part of the impact hammer;
32: iron block;
30: thermoplastic extruder; 40: radome test sample plate;
X: obstacle;
Y: hole;
M: tower.

### DESCRIPTION OF EMBODIMENTS

To make the objectives, technical solutions, and advantages of this application clearer, the following describes implementations of this application in detail with reference to the accompanying drawings.

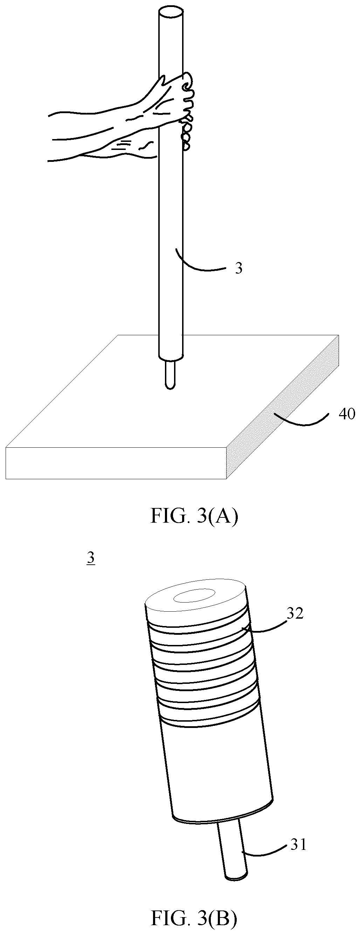

As described above, an antenna is subject to impact in a hoisting process. For example, as shown in FIG. 2, when an antenna 1 is hoisted, the antenna 1 may hit an obstacle X on a wall or a tower M. To resist the impact, the antenna 1 is usually disposed in the radome 10 shown in FIG. 1. In addition, to ensure that the radome 10 has good impact resistance performance, an impact test method shown in FIG. 3(A) is usually used in engineering, to detect whether the radome 10 meets an impact resistance performance requirement.

Specifically, as shown in FIG. 3(A), test personnel usually select a 300 mm*300 mm radome test sample plate 40, and then use an impact hammer 3 shown in FIG. 3(B) to vertically impact the radome test sample plate 40 from a height of 1.3 m above the radome test sample plate 40, to detect whether the radome 10 meets impact resistance performance. As shown in FIG. 3(B), the impact hammer 3 includes an end part 31 of the impact hammer and a detachable iron block 32 that is used for counterweight. In some embodiments, the test personnel may choose to increase or decrease a quantity of iron blocks 32 to change an impact force of the impact hammer 3, to perform an impact resistance performance test on the radome with different forces. This is not limited in this application.

In addition, the size of the radome test sample plate 40 and the vertical impact height of the impact hammer 3 are merely examples. In some other embodiments, the radome test sample plate 40 may alternatively have a larger size, for example, 450 mm*450 mm, or may alternatively have a smaller size, for example, 200 mm*200 mm, 400 mm*200 mm, or the like. Neither the size nor a shape of the radome test sample plate 40 is limited in this application. Similarly, the vertical impact height of the impact hammer 3 is also an example. In some other embodiments, the vertical impact height of the impact hammer 3 may alternatively be higher or lower. It may be understood that this is related to a specific test item that needs to be performed on a to-be-tested radome test sample plate 40. The vertical impact height of the impact hammer 3 is not limited in this application.

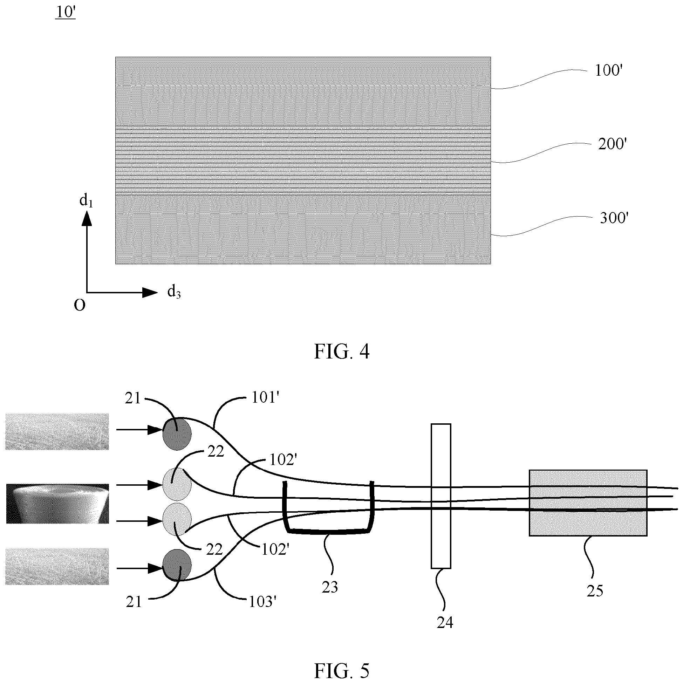

To enable the radome 10 to have good impact resistance performance, in some embodiments, a fiberglass radome is provided. As shown in FIG. 4, the fiberglass radome 10' includes a first surface layer 100', a middle layer 200', and a second surface layer 300' that are sequentially stacked. The first surface layer 100' and the second surface layer 300' are made of glass mats, and the middle layer 200' is made of unidirectional glass fiber yarn.

Specifically, in some embodiments, a process of manufacturing the fiberglass radome 10' is provided. With reference to FIG. 4 and FIG. 5, it can be learned that the process of producing the fiberglass radome 10' includes: An upper glass mat 101' passes through an upper first yarn wheel 21, unidirectional glass fiber yarn 102' passes through a middle second yarn wheel 22, and a lower glass mat 103' passes through a lower first yarn wheel 21; and then the upper glass mat 101', the unidirectional glass fiber yarn 102', and the lower glass mat 103' are impregnated into a glue groove 23 including unsaturated polyester resin. After being fully impregnated, the upper glass mat 101', the unidirectional glass fiber yarn 102', and the lower glass mat 103' form, by using a guide plate 24, a stacked-layer structure in which the first layer 100' is the glass mat, the middle layer 200' is the unidirectional glass fiber yarn, and the second layer 300' is the glass mat, and then enter a mold 25. In the mold 25, the glass mat, the unidirectional glass fiber yarn, and the unsaturated polyester resin are heated to a temperature (usually ranging from 150°C to 180°C) required for a curing reaction of the unsaturated polyester resin. After a curing reaction at a high temperature, the unsaturated polyester resin bonds the glass mat and the unidirectional yarn to form a composite cover body. Then, the composite cover body is subsequently pulled and cut to obtain the fiberglass radome.

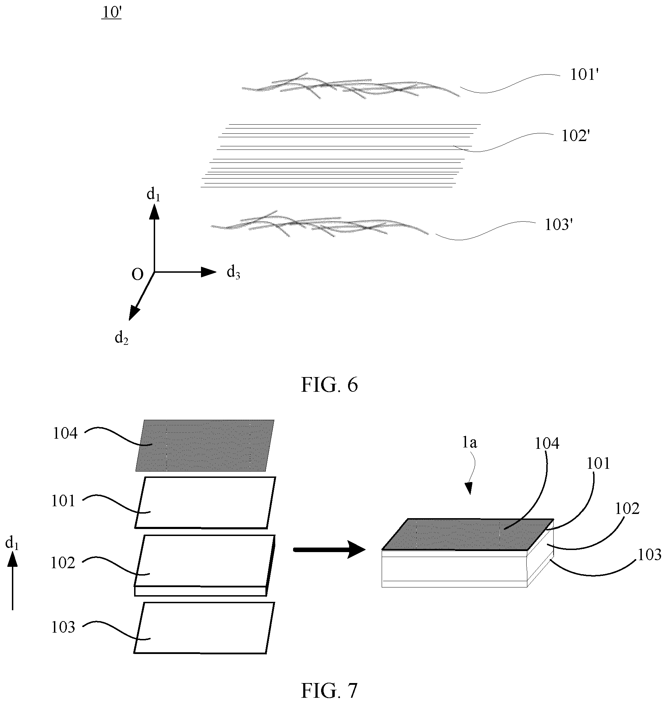

However, as shown in FIG. 6, in the fiberglass radome, the first layer 100' includes the upper glass mat 101', the middle layer 200' includes the unidirectional glass fiber yarn 102', and the second layer 300' includes the lower glass mat 103'. The glass mat is formed by non-directionally combining continuous raw fibers or short-cut raw fibers by using a chemical adhesive or through mechanical action. Therefore, impact resistance performance of the first surface layer 100' of the fiberglass radome is not good enough. In addition, the middle layer 200' of the fiberglass radome is unidirectional yarn extending along d₃, and impact resistance performance of the unidirectional yarn is not good enough. Consequently, the first layer 100', the middle layer 200', and the second layer 300' in the radome 10' are easily split between layers in a d₁ direction in FIG. 6, and then an impact force is applied to the middle layer 200'. When the unidirectional yarn serving as the middle layer 200' is impacted, the middle layer is easily split in a d₂ direction shown in FIG. 6. As a result, the radome 10' that has a composite structure and that is shown in FIG. 5 and FIG. 6 is easily cracked when being impacted, that is, impact resistance performance of the radome 10' is not good.

In addition, a glass fiber content in the fiberglass radome 10' is high, and is usually greater than 80%. A density of a glass fiber is 2.7 g/cm³, and a dielectric constant (Dielectric constant, Dk) of the glass fiber is 6.13. As a result, a density of the fiberglass radome 10' made of the glass fiber is high (> 1.9 g/cm³), a Dk is also up to 4.0 to 4.8, and a dielectric loss (Dissipation Factor, Df) value ranges from 0.01 to 0.03. Details are shown in Table 1.

**Table 1**

| | | |
|---|---|---|
| Composition of the fiberglass radome | | 100' (0.25 mm) + 200' (2.0 mm) + 300' (0.25 mm) |
| Impact of a falling hammer on the radome (impact height: 1.3 m) | | 1.3 kg |
| Lightweight of the radome (density*thickness) | | A (1.9*2.5) |
| Dielectric characteristic of the fiberglass radome | Fiberglass Dk | 4.8 |
| | Fiberglass Df | 0.03 |

The dielectric constant indicates a ratio of a capacitance of a capacitor made by using an insulation material as a medium to a capacitance of a capacitor made by using a vacuum as a medium, where the capacitors have a same size; and may represent a capability of polarizing an electrolyte and storing a charge. The dielectric loss indicates an energy loss, in a form of internal heating (a temperature rise), of a medium placed in an alternating current electric field. The dielectric constant and the dielectric loss jointly indicate dielectric performance of a medium. The smaller the dielectric constant and the dielectric loss, the better dielectric performance of the medium. The larger the dielectric constant and the dielectric loss, the poorer dielectric performance of the medium. Therefore, neither dielectric performance nor impact resistance performance of the fiberglass radome 10' is good enough.

To overcome the foregoing disadvantages of the fiberglass radome 10', some embodiments of this application provide a radome 10. As shown in FIG. 7, a stacked plate forming the radome 10 includes a first layer 101, a second layer 102, and a third layer 103 that are sequentially stacked. The first layer 101 and the third layer 103 are of a same structure and are made of a same material. Stacking means that a plurality of layers of plates are sequentially placed. The stacked plate forming the radome 10 indicates a status after plates used for the radome 10 are stacked, for example, a plate group for forming a composite plate in the following. The stacked plate represents a material characteristic and a structural characteristic of a raw material plate before forming of the composite plate.

As shown in FIG. 7, in some embodiments, the stacked plate 1a forming the radome 10 may further include a weather-resistant coloring layer 104. The weather-resistant coloring layer 104 is stacked on a side that is of the first layer 101 and that is away from the second layer 102, or the weather-resistant coloring layer 104 is stacked on a side that is of the third layer 103 and that is away from the second layer 102. The weather-resistant coloring layer 104 is configured to improve overall aesthetics and weather resistance of the radome 10. In some implementations, the weather-resistant coloring layer 104, the first layer 101, the second layer 102, and the third layer 103 are sequentially stacked in a reverse direction of a d₁ direction.

It may be understood that, to reduce a quantity of layers of the plate so as to reduce a hot pressing difficulty of the stacked plate 1a, in some implementations, the weather-resistant coloring layer 104 and the first layer 101 are integrally formed. For example, a part of PP fibers in the first layer 101 form the weather-resistant coloring layer 104. Alternatively, the weather-resistant coloring layer 104 and the third layer 103 are integrally formed. For example, a part of PP fibers in the third layer 103 form the weather-resistant coloring layer 104.

In some embodiments, to reduce mass of the radome 10, the second layer 102 is of an organic foam structure. The organic foam structure is lighter than the glass fiber used for manufacturing the fiberglass radome 10', so that the mass of the radome 10 can be effectively reduced. This further meets a lightweight requirement of the radome 10.

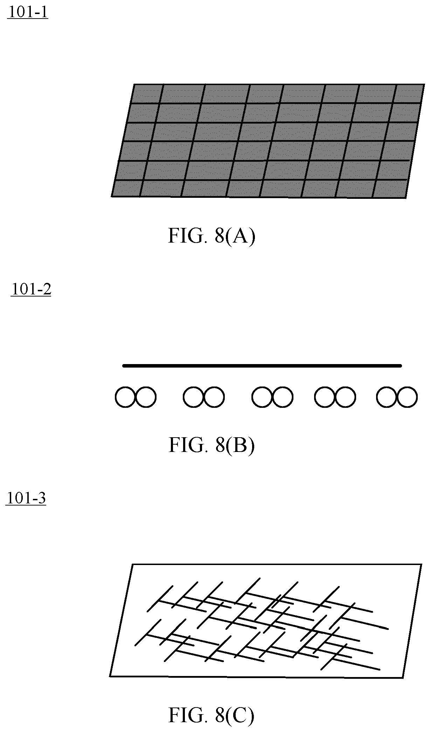

In some embodiments, as shown in FIG. 8(A), the first layer 101 may be a prepreg layer 101-1 obtained by compounding a continuous-fiber-woven object and thermoplastic resin. In this way, it can be ensured that, when hot pressing is performed on the prepreg layer 101-1, after the thermoplastic resin material is melted, the continuous fiber is still of a woven structure. This improves impact resistance performance of the radome 10. For example, the prepreg layer 101-1 is a woven object formed by weaving composite fibers formed by inorganic fibers and organic fibers. For another example, the prepreg layer 101-1 is a woven object formed by weaving fibers formed by high melting point organic fibers and low melting point organic fibers. For still another example, the prepreg layer 101-1 is a woven object formed by weaving core-shell fibers formed by compounding a high melting point organic material and a low melting point organic material. Alternatively, for yet another example, the prepreg layer 101-1 may be formed by compounding an inorganic fiber-woven object and thermoplastic resin. The core-shell fiber includes a core part and a peripheral part surrounding the core part. The core part is made of a high melting point material, and the peripheral part is made of a low melting point material. For example, the core part is made of a high melting point organic material, and the peripheral part is made of a low melting point organic material. For another example, the core part is made of an inorganic material, and the ring part is made of an organic material.

In some other embodiments, as shown in FIG. 8(B), the first layer 101 may be a prepreg layer 101-2 obtained by combining prepreg tapes obtained by compounding unidirectional continuous fibers and thermoplastic resin. The prepreg tape is a unidirectional tape having a specific thickness, where the unidirectional tape is formed by unidirectionally arranging fibers and impregnating and wrapping the fibers by using organic resin. A material of the unidirectional continuous fiber in the prepreg tape is consistent with a material of the high melting point material or the high melting point fiber in FIG. 8(A), and a material of the thermoplastic resin in the prepreg tape may be consistent with a material of the low melting point fiber or the low melting point material in FIG. 8(A). The prepreg layer 101-2 is formed by laminating and compounding several layers of prepreg tapes at 0°/90°. In comparison with FIG. 8(A), a difference lies in that an arrangement manner of the prepreg tapes of the prepreg layer 101-2 is different from that of the prepreg layer 101-1. The prepreg layer 101-1 uses a weaving manner, and the prepreg layer 101-2 uses a manner of lamination and compounding at 0° and 90°. It may be understood that 0° and 90° are merely examples. In another embodiment, a prepreg tape obtained by compounding unidirectional continuous inorganic fibers and thermoplastic resin may alternatively be laminated and compounded at another angle, for example, 30°, 45°, 60°, or the like. A specific angle value is not limited in this application. Lamination and compounding may be understood as follows: It is assumed that there are two layers of prepreg tapes, prepreg tapes on a first layer are arranged in a first direction, and prepreg tapes on a second layer are arranged in a second direction, and the first direction is not parallel to the second direction, but the first layer is parallel to the second layer. It may be understood that the inorganic fiber in FIG. 8(B) may alternatively be organic fiber with a relatively high melting point.

In still some other embodiments, as shown in FIG. 8(C), the first layer 101 may alternatively be a prepreg layer 101-3 obtained by compounding unordered inorganic fibers and thermoplastic resin. In comparison with an ordered arrangement manner (for example, a woven structure or a 0° and 90° lamination structure) of the inorganic fibers in the prepreg layer 101-1 and the prepreg layer 101-2 that are shown in FIG. 8(A) and FIG. 8(B), an arrangement manner of the inorganic fibers in the prepreg layer 101-3 is unordered (for example, a glass mat), to improve a capability of the first surface layer to dissipate stress caused by external impact. This improves impact resistance performance of a radome made of the prepreg layer 101-3.

The high melting point fibers in the prepreg layers in FIG. 8(A) to FIG. 8(C) are of mesh structures arranged in different directions. In comparison with a structural defect of the unidirectional yarn in the middle layer 200' of the fiberglass radome 10', the radome 10 in this application can fully transfer and dissipate stress caused by external impact. Therefore, the radome has better impact resistance performance.

After the surface layer structure of the radome before molding in some embodiments is described, the following continues to describe a structure after molding, a molding manner, and a required raw material of the radome. The raw material is a material required for forming the radome.

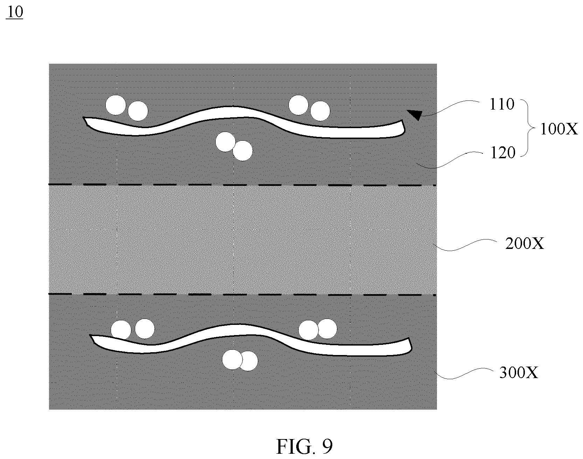

Specifically, as shown in FIG. 9, a structure of the radome 10 includes a first surface layer 100X, a middle layer 200X, and a second surface layer 300X that are sequentially stacked. The first surface layer 100X is formed by compounding fibers 110 arranged in a mesh structure and thermoplastic resin 120, the middle layer 200X is of an organic foam structure, and the second surface layer 300X and the first surface layer 100X are of a same structure and are made of a same material. In some embodiments, the fibers may be organic fibers or inorganic fibers.

In some embodiments, the inorganic fiber includes at least one of a glass fiber, a basalt fiber, an andesite fiber, an aluminum silicate fiber, a boron nitride fiber, an aluminum oxide fiber, and a quartz fiber. A type of the inorganic fiber is not specifically limited in this application.

In some embodiments, the organic fiber includes at least one of a PP fiber, a PE fiber, a PBT fiber, a PET fiber, and a PTT fiber. A type of the organic fiber is not specifically limited in this application.

In some embodiments, a weaving manner of the fiber may be any one of plain weaving, square plain weaving, rib weaving, twill weaving, and satin weaving. The weaving manner of the fiber is not specifically limited in this application. Preferably, the weaving manner of the fiber is plain weaving.

In some embodiments, the thermoplastic resin includes at least one of polypropylene (polypropylene fiber, PP), polyethylene (polyethylene, PE), polyvinyl chloride (polyvinyl chloride, PVC), polybutylene terephthalate (polybutylene terephthalate, PBT), polyethylene glycol terephthalate (polyethylene glycol terephthalate, PET), polytrimethylene terephthalate (polytrimethylene terephthalate, PTT), polycarbonate (polycarbonate, PC), and polyphenylene oxide (polyphenylene oxide, PPO). A type of the thermoplastic resin is not specifically limited in this application.

In some embodiments, a material of the organic foam structure of the middle layer 200X is the same as a material of the thermoplastic resin, to improve fusion between the first surface layer 100X and the middle layer 200X and between the second surface layer 300X and the middle layer 200X, and improve mechanical performance of the radome 10.

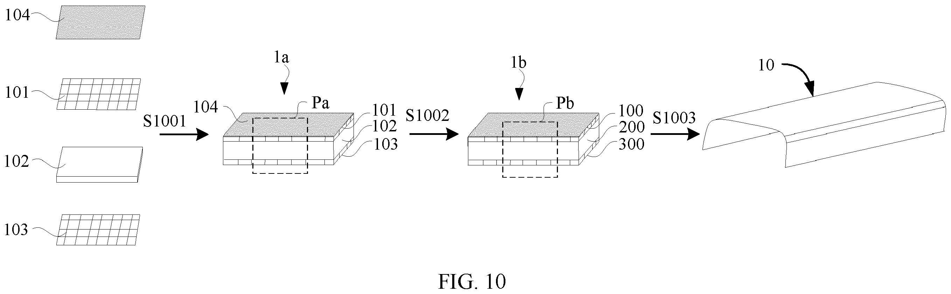

Specifically, as shown in FIG. 10, a molding process of the radome 10 includes the following steps.

S1001: Sequentially stack layers from top to bottom.

As shown in the figure, in some embodiments, a prepreg layer 101 that forms a first surface layer 100, an organic foam material layer 102 that forms a middle layer 200, and a prepreg layer 103 that forms a second surface layer 300 are sequentially stacked from top to bottom based on an A-type sandwich structure, to form a layer architecture 1a for manufacturing the radome.

In another alternative implementation, the prepreg layers and the organic foam material layer are sequentially stacked from top to bottom based on a C-type sandwich structure, to form a composite plate 1b for manufacturing the radome 10. Because the C-type sandwich structure is similar to the A-type sandwich structure, no further description is provided herein.

It may be understood that, because the radome is exposed to an external environment for a long time, to improve weather resistance of the radome, in some embodiments, a weather-resistant coloring layer 104 may be further added on the prepreg layer 101 that forms the first surface layer 100. In this way, not only weather resistance of the radome can be improved, but also appearance aesthetics of the radome can be improved.

Specific material selection for each layer is specifically described in the following embodiments. Details are not described herein.

S1002: Perform hot pressing on the layer architecture obtained through stacking, to form the composite plate.

After the layers 101, 102, and 103 are stacked, a stacked plate 1a shown in FIG. 10 is formed. Then, hot pressing is performed on the stacked plate 1a to form the composite plate 1b. It can be learned from FIG. 10 that the composite plate 1b includes the first surface layer 100, the middle layer 200, and the second surface layer 300 that are sequentially stacked.

It should be noted that, for different compositions and composition proportions of the prepreg layer, temperatures for performing hot pressing on the layer architecture obtained through stacking are also different. A specific temperature for performing hot pressing is described in detail in the following embodiments. Details are not described herein.

It may be understood that, in some implementations, a size of the composite plate 1b is a predetermined size, and the predetermined size is equivalent to a size of a radome, that is, one composite plate 1b is used to form one radome. In another alternative implementation, the composite plate 1b is a continuous plate, and before the radome is formed, the pre-composite plate 1b further needs to be cut to an appropriate size.

S1003: Heat the composite plate 1b for softening and molding, to obtain the radome.

Molding may be roll pressing or compression molding. For example, after the composite plate 1b is obtained, the composite plate 1b needs to be heated for a specific period of time for softening, and then roll pressing or compression molding is performed on the softened composite plate 1b to manufacture the radome. It should be noted that, for different compositions and composition proportions of the composite plate 1b, temperatures and time for performing hot pressing on the composite plate 1b are also different. This part of content is specifically described in detail in the following embodiments. Details are not described herein.

It may be understood that, in the foregoing molding step, the molding step of the composite plate 1b may be further merged with a molding step of the radome, that is, hot pressing and molding are performed on the layer architecture obtained through stacking, to obtain the radome.

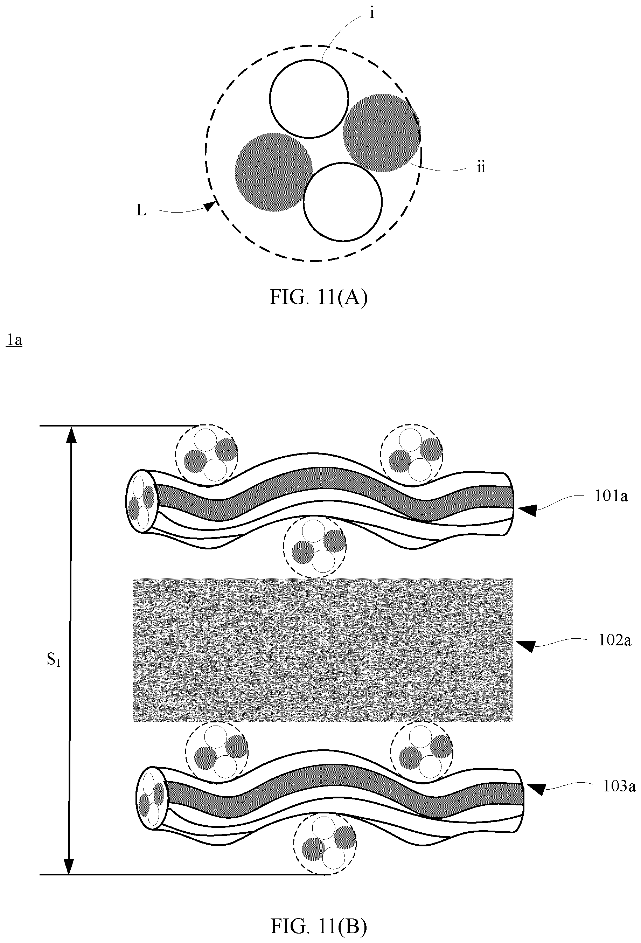

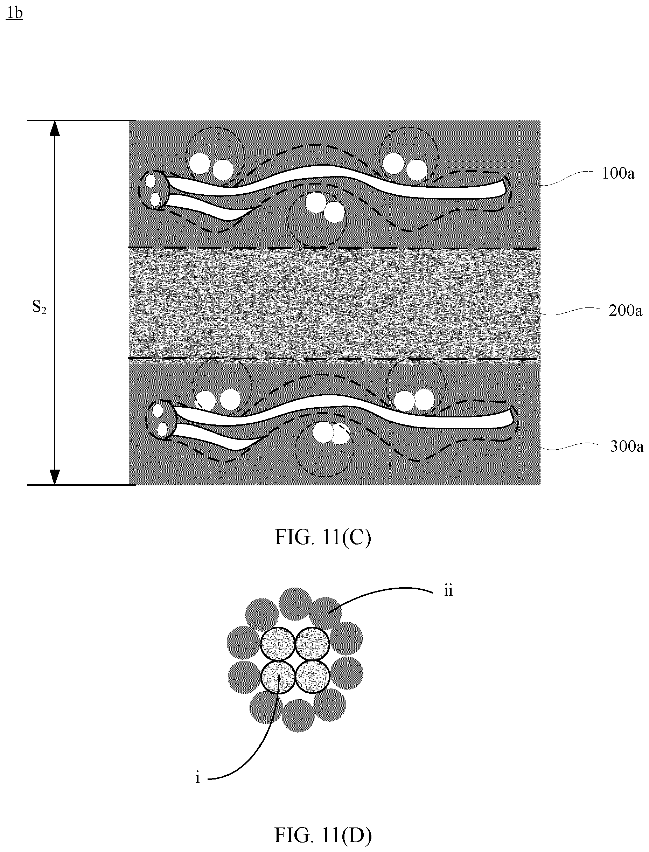

Specifically, FIG. 11(A), FIG. 11(B), and FIG. 11(C) show schematic diagrams of structures of the foregoing plate before and after molding according to some embodiments of this application. FIG. 11(A) is a sectional view of a fiber, FIG. 11(B) is an enlarged view of a Pa area in FIG. 10, and FIG. 11(C) is an enlarged view of a Pb area in FIG. 10.

In some embodiments, the fiber is a composite fiber, and the composite fiber is formed by compounding a high melting point fiber and a low melting point fiber. The high melting point fiber may be an inorganic fiber, or may be a high melting point organic fiber. The low melting point fiber is an organic fiber.

For example, as shown in FIG. 11(A), the composite fiber is formed by compounding an inorganic fiber i and an organic fiber ii. The inorganic fiber i may be a glass fiber, and the organic fiber ii may be a PP fiber. In FIG. 11(A), a hollow circle represents a cross-sectional profile of the glass fiber, a solid circle represents a cross-sectional profile of the PP fiber, and an area circled by a dashed line L represents a boundary of the composite fiber formed by the glass fiber and the PP fiber. This is merely for illustration purpose. It may be understood that there is no boundary represented by the dashed line L in an actual structure.

In some other embodiments, as shown in FIG. 11(D), the composite fiber may alternatively be of a core-shell structure including fibers of different materials, a core part of the core-shell structure is made of a high melting point PP fiber, and a peripheral part of the core-shell structure is made of a low melting point PP fiber.

This is described in detail in the following.

It can be learned from FIG. 11(B) that, a stacked plate 1a before molding includes a first layer 101a, a second layer 102a, and a third layer 103a. The first layer 101a, the second layer 102a, and the third layer 103a are arranged from top to bottom based on an A-type sandwich structure.

The first layer 101a is made of composite fibers obtained by mixing glass fibers and PP fibers based on a specific weight ratio (as shown in FIG. 11(A)), and the composite fibers are woven into the first layer 101a in a plain weaving manner. The second layer 102a is made of a PP foam material. A structure and a material of the third layer 103a are consistent with those of the first layer 101a. Details are not described herein again. The foregoing materials are laminated based on the A-type sandwich structure to form the stacked plate 1a. A thickness of the stacked plate 1a is S₁.

In some embodiments, a grammage of the first layer 101a ranges from 200 g/m² to 1500 g/m², and preferably the grammage of the first layer 101a ranges from 400 g/m² to 1000 g/m².

In some embodiments, the PP fiber may alternatively be another organic fiber, for example, at least one of a PE fiber, a PBT fiber, a PET fiber, and a PTT fiber.

In some embodiments, the glass fiber may alternatively be another inorganic fiber, for example, at least one of a basalt fiber, an andesite fiber, an aluminum silicate fiber, a boron nitride fiber, an aluminum oxide fiber, and a quartz fiber. A type of the inorganic fiber is not specifically limited in this application.

In some embodiments, to reduce a weight of the radome 10, the second layer 102a of the radome 10 in this embodiment of this application is mainly made of a lightweight filling material. For example, the second layer 102a may be made of at least one of a PP plate, a PE plate, a PBT plate, a PET plate, a PTT plate, a PC plate, a PPO plate, and a lightweight PP glass mat reinforced thermoplastics (glass mat reinforced thermoplastics, GMT) composite plate. A type of the lightweight filling material is not limited in this application.

To further reduce mass of the second layer 102a, the second layer 102a may alternatively use a more lightweight foam material. For example, the second layer 102a may be made of at least one of a PP foam plate, a PE foam plate, a PVC foam plate, a PBT foam plate, a PET foam plate, a PTT foam plate, a PC foam plate, and a PPO foam plate. In some embodiments, a density of the second layer 102 ranges from 0.15 g/cm³ to 1.4 g/cm³, preferably 0.4 g/cm³ to 1.0 g/cm³. A thickness of the second layer 102a ranges from 0.5 mm to 3 mm.

In some embodiments, to enable the radome 10 to meet a lightweight requirement, a material of the second layer 102a is a PP foam plate. Further, after a plurality of tests are performed by the inventor, when a density of the PP foam plate is 0.4 g/cm³, and a thickness of the PP foam plate is 1 mm, lightweight effect of the radome 10 is better.

Then, hot pressing and compounding are continually performed, by using a double steel tape or a double Teflon tape at a temperature ranging from 170°C to 240°C, on the first layer 101a, the second layer 102a, and the third layer 103a that are arranged based on the structure shown in FIG. 11(B), and then room temperature cooling is performed, to obtain a composite plate 1b shown in FIG. 11(C). PP fibers in a first surface layer 100a and PP fibers in a second surface layer 300a of the composite plate 1b are melted into liquid, glass fibers remain in a woven state, and the liquid PP obtained through melting is filled between the glass fibers in the first surface layer 100a and between the glass fibers in the second surface layer 300a, to form the composite plate 1b after condensation. In this case, a thickness of the composite plate 1b is S₂, and it is not difficult to understand that S₂ is less than S₁.

Then, the composite plate 1b is heated for roll pressing or compression molding. Specifically, the composite plate 1b is continually heated at 190°C to 240°C for 1 min to 3 min for softening, and then roll pressing or compression molding is performed to obtain the radome 10 shown in FIG. 10.

In some embodiments, the composite fibers may alternatively be woven in a manner such as square plain weaving, rib weaving, twill weaving, satin weaving, or the like. A weaving manner of the composite fiber is not limited in this application. Preferably, the composite fibers are woven in a plain weaving manner.

In some embodiments, to enhance impact resistance performance of the radome 10, the composite fibers may be composite fibers obtained by mixing glass fibers and PP fibers based on a weight ratio of 60:40, and a grammage of a first layer 101a obtained after the composite fibers are woven is 600 g/m². It may be understood that, in some other embodiments, the weight ratio of the glass fibers to the PP fibers in the composite fibers may range from (90:10) to (50:50). It should be noted that the grammage refers to a weight of a material in grams per square meter. The first layer 101a is used as an example. The grammage refers to a weight of the composite material formed by the glass fiber and the PP fiber in grams per square meter.

Characteristics of the radome manufactured by using the composite plate 1b are shown in the following Table 2.

**Table 2**

| Composition of the first layer 101a (or the third layer 103a) | | Composite fiber formed by the glass fiber and the PP fiber based on the weight ratio of 60:40 |
|---|---|---|
| Impact of a falling hammer on the radome | | > 2.2 kg |

| Composition of the first layer 101a (or the third layer 103a) | | Composite fiber formed by the glass fiber and the PP fiber based on the weight ratio of 60:40 |
|---|---|---|
| Lightweight of the radome (density*thickness) | | 0.4 A (0.95*2) |
| Dielectric characteristic of the radome | DK | 2.8 |
| | Df | 0.0056 |

It can be learned from comparison between Table 2 and Table 1 that impact resistance performance of the radome in this application is significantly improved. This can meet a requirement of a radome whose weigh is around 90 kg. In comparison with the dielectric constant and the dielectric loss of the radome manufactured by using the material in Table 1, a dielectric constant is reduced by 2, and a dielectric loss is reduced by 0.0244. The dielectric constant indicates a ratio of a capacitance of a capacitor made by using an insulation material as a medium to a capacitance of a capacitor made by using a vacuum as a medium, where the capacitors have a same size; and may represent a capability of polarizing an electrolyte and storing a charge. The dielectric loss indicates an energy loss, in a form of internal heating (a temperature rise), of a medium placed in an alternating current electric field. The dielectric constant and the dielectric loss jointly indicate dielectric performance of a medium. The smaller the dielectric constant and the dielectric loss, the better dielectric performance of the medium. The larger the dielectric constant and the dielectric loss, the poorer dielectric performance of the medium. Therefore, the radome in this application also has better dielectric performance than the radome manufactured by using the material in Table 1.

In addition, the first surface layer 100a and the second surface layer 300a are of a woven fiber mesh structure, and falling hammer impact that can be resisted is increased and may up to more than 2.2 kg (for example, a value such as 3 kg, 4 kg, or the like). In comparison with a case in which the fiberglass radome 10' can resist falling hammer impact of only 1.3 kg, falling hammer impact resistance is also greatly improved.

Further, in the foregoing embodiment, a middle layer 200a is of a foam structure. In comparison with a case in which the fiberglass radome 10' completely uses a glass fiber structure, lightweight is reduced by 0.6 A. That is, the radome 10 in this application is lighter.

In addition, it can be learned from the foregoing that the first surface layer 100a and the second surface layer 300a of the radome in this application use a composite material obtained by mixing an inorganic fiber and a thermoplastic resin material. Although a radome manufactured by using only an organic material such as thermoplastic resin or the like has better dielectric performance, impact resistance of thermoplastic is too poor. In comparison with the radome manufactured by using only thermoplastic in another embodiment, the radome 10 in this application uses the composite material of the inorganic fiber and the thermoplastic resin material. Therefore, a balance between impact resistance performance and dielectric performance is achieved.

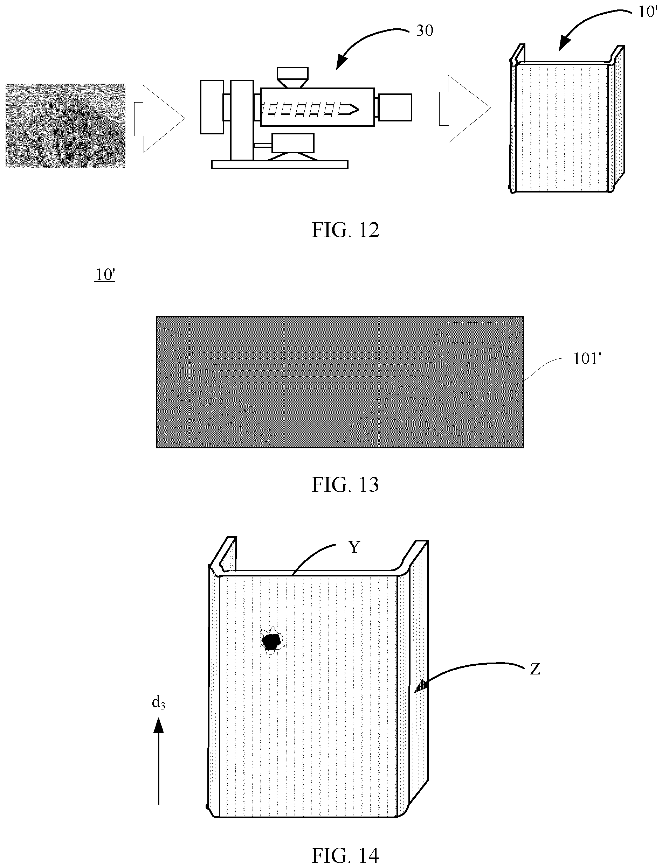

For example, a plastic radome 10' shown in FIG. 12 is manufactured by using an extrusion process provided in FIG. 12. Specifically, the plastic radome 10' is obtained by extruding thermoplastic particles by a thermoplastic extruder 30 and then extruding the thermoplastic particles into a mold, and performing cooling, pulling, and cutting. It can be learned from FIG. 13 that the plastic radome 10' has only one layer 101', and the layer 101' is also made of thermoplastic. Because an effective length of a glass fiber in the thermoplastic particle is usually less than 2 mm, a length of a glass fiber in the layer 101' made of the thermoplastic particle is shorter. Therefore, it may be understood that impact resistance performance of the plastic radome 10' is not good. In an impact test shown in FIG. 2, the plastic radome 10' is prone to be punctured. For example, after the impact test shown in FIG. 2 is performed on a plastic radome 10' shown in FIG. 14, a hole Y is caused.

Further, in the radome 10 in this application, to have better adhesiveness between the first surface layer 100a, the middle layer 200a, and the second surface layer 300a, the first surface layer 100a, the middle layer 200a, and the second surface layer 300a all use a same thermoplastic resin material. For example, the PP fiber is the same as the thermoplastic material of the middle layer. Based on this design, when the composite plate 1b is manufactured, only the PP fiber needs to be heated and melted, and then hot pressing is performed, so that the first surface layer 100a, the middle layer 200a, and the second surface layer 300a can be more tightly bonded together. In comparison with another embodiment in which layers of a radome use different materials, and therefore, an adhesive needs to be used to enable a structure in which the layers of the radome are tightly bonded to be firmer, this embodiment not only has better impact resistance performance, but also saves materials and is more environment-friendly.

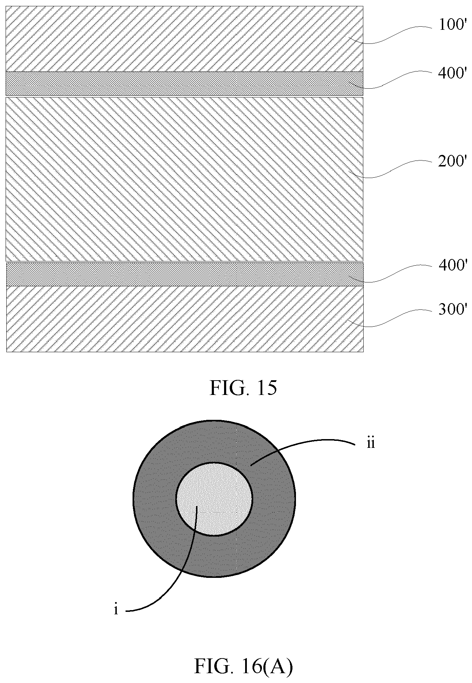

In some embodiments, for example, an adhesive radome 10' is provided in FIG. 15. The adhesive radome 10' has a first layer 100', a second layer 400', a third layer 200', a fourth layer 400, and a fifth layer 300'. The first layer 100' is an upper surface layer, the second layer 400' is an adhesive, the third layer 200' is a core layer (or a middle layer), the fourth layer 400' is also the adhesive, and the fifth layer 300' is a lower surface layer. A polyurethane adhesive or a phenolic resin adhesive is used to bond the upper surface layer 100', the lower surface layer 300', and the core layer 200'. The upper surface layer 100' and the lower surface layer 300' are made of a fiber-reinforced thermoplastic composite material (a long-fiber-reinforced thermoplastic composite material or a continuous-fiber-reinforced thermoplastic composite material) or a laminated material of a fiber-reinforced thermoplastic composite material and a transition material (the transition material is a fiber mat or non-woven fabric). A foam material used for the core layer 200' is a thermosetting material such as a polyurethane foam material, a phenolic resin foam material, an epoxy resin foam material, or the like.

It can be learned from analysis of the foregoing structure that, because the upper surface layer and the lower surface layer 300' of the adhesive radome 10' use the fiber-reinforced thermoplastic composite material, a glass fiber of the long-fiber-reinforced thermoplastic composite material is short, and impact resistance performance of the long-fiber-reinforced thermoplastic composite material is poor, impact resistance performance of the adhesive radome 10' is relatively poor. In addition, because the core layer 200' of the adhesive radome 10' uses the thermosetting foam material, the upper surface layer and the lower surface layer need to be bonded (or combined) with the core layer by using the adhesive. To ensure bonding quality of the adhesive, the surface layer, the adhesive layer, the core layer, the adhesive layer, and the surface layer need to be first laminated (as shown in FIG. 15), bubbles are exhausted, and then high-temperature curing and bonding are performed. The processing process has many phases, and is complex and costly. Moreover, the thermosetting foam material has no thermoplasticity, and the composite plate obtained based on the foregoing structure has no plasticity and cannot be processed for a second time. Therefore, the composite plate is applicable to only processing of a flat-shaped radome. Therefore, molding of the radome that is shown in FIG. 10 and that has a complex structure cannot be met.

The foregoing describes a process in which the composite fibers are formed by the PP fibers and the glass fibers, and the composite fibers are woven into the prepreg layer 101-1. It may be understood that, in some embodiments, the composite fiber may alternatively be a core-shell fiber formed by compounding a low melting point material and a high melting point material. The core-shell fiber includes a core part and a peripheral part. The core part extends in an extension direction of the composite fiber, and the peripheral part is disposed around the core part and extends in the extension direction of the composite fiber.

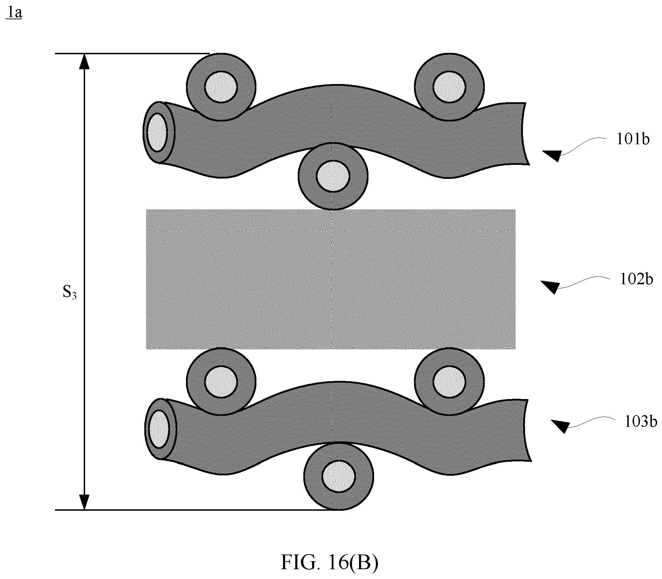

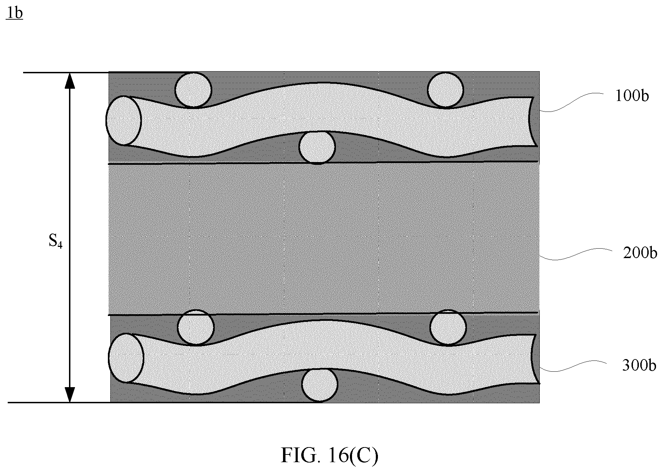

Specifically, FIG. 16(A), FIG. 16(B) and FIG. 16(C) show schematic diagrams of structures of the foregoing plate before and after molding according to some embodiments of this application. FIG. 16(A) is a sectional view of a fiber, FIG. 16(B) is an enlarged view of the Pa area in FIG. 10, and FIG. 16(C) is an enlarged view of the Pb area in FIG. 10.

As shown in FIG. 16(A), a core part i (that is, a kernel part) of a composite material fiber is made of a high melting point PP material, and a peripheral part ii (that is, a shell part) of the composite material fiber is made of a low melting point PP material.

It may be understood that the core part of the composite material fiber may alternatively be made of a high melting point inorganic fiber/or a high melting point organic fiber. Details are not described herein. The following uses an example in which the core part of the composite material fiber is made of the high melting point PP material and the peripheral part of the composite material fiber is made of the low melting point PP material, to describe a molding process of the composite material fiber and performance of the composite material fiber after molding.

Before this, it should be noted that a difference between the following embodiment and the foregoing embodiment in FIG. 11 lies in that fiber forms are different. Specifically, in the following embodiment, a fiber used to be woven into a woven object is a single fiber of a core-shell type, while fibers used to be woven into a woven object in FIG. 11 are a fiber bundle obtained after a plurality of types of fibers are mixed. For other same steps and weaving manners, refer to the related descriptions in FIG. 10 and FIG. 11, and no further description is provided herein.

Specifically, as shown in FIG. 16(B), a stacked plate 1a before molding includes a first layer 101b, a second layer 102b, and a third layer 103b that are sequentially stacked. A light circle represents the high melting point PP material, and a dark ring represents the low melting point PP material. It can be learned that the first layer 101b is formed by weaving, in a plain weaving manner, composite material fibers formed by compounding the low melting point PP material and the high melting point PP material, and the second layer 102b is still made of a PP foam material. In this case, a thickness of the stacked plate 1a is S₃.

In some embodiments, the composite material fibers may alternatively be woven in a manner such as square plain weaving, rib weaving, twill weaving, satin weaving, or the like. A weaving manner of the composite material fiber is not limited in this application.

In some embodiments, to enhance impact resistance performance of the radome 10, a surface density of the first layer 101b formed by weaving the composite material fibers formed by compounding the low melting point PP material and the high melting point PP material is 450 g/m².

In some embodiments, to enable the radome 10 to meet a lightweight requirement, a material of the second layer 102b is a PP foam plate. Further, after a plurality of tests are performed by the inventor, when a density of the PP foam plate is 0.4 g/cm³ and a thickness of the PP foam plate is 1 mm, the manufactured radome can better meet the lightweight requirement, and also has better impact resistance performance.

Then, hot pressing and compounding are performed, by using a double steel tape or a double Teflon tape at a temperature ranging from 160°C to 170°C, on the first layer 101b, the second layer 102b, and the third layer 103b that are arranged based on the structure shown in FIG. 16(B), and then room temperature cooling is performed, to obtain a composite plate 1b shown in FIG. 16(C). It can be learned from FIG. 16(C) that the low melting point PP material in the first layer 100b is melted into liquid, the high melting point PP material at the inner layer is in a fiber form and remains in a woven state, and the low melting point liquid PP material obtained through melting is filled between the high melting point PP fibers material in the first layer 100b. In addition, because hot pressing is performed, a thickness of the composite plate 1b is S₄, and it is not difficult to understand that S₄ is less than S₃.

Finally, the composite plate 1b is heated for roll pressing or compression molding. Specifically, the composite plate 1b is continually heated at 160°C to 170°C for 1 min to 3 min for softening, and then roll pressing or compression molding is performed to obtain the radome 10 shown in FIG. 10.

Characteristics of the radome manufactured by using the composite plate 1b are shown in the following Table 3.

**Table 3**

| Composition of the first layer 101b (or the third layer 103b) | | Core-shell fiber formed by compounding the low melting point PP material and the high melting point PP material |
|---|---|---|
| Impact of a falling hammer on the radome (1.3 m) | | > 3.1 kg |
| Lightweight of the radome (density*thickness) | | 0.27 A (0.65*2) |
| Dielectric characteristic of the radome | DK | 2.3 |
| | Df | 0.002 |

It can be learned from comparison between Table 3 and Table 1 that the first layer 101b of the radome in this embodiment is formed by weaving the composite material fibers formed by compounding the high melting point PP material and the low melting point PP material, that is, a PP material content increases. Therefore, impact resistance performance of the radome is significantly improved, and falling hammer impact that can be resisted is increased and may up to more than 3.1 kg (for example, a value such as 4 kg, 5 kg, or the like). In addition, the radome in this application is made of a PP fiber material. The PP material is lighter than the glass fiber, and has a lower dielectric loss and a lower dielectric constant. Therefore, in comparison with the weight of the radome manufactured by using fiberglass in Table 1, a weight of the radome in this embodiment can be reduced by 73%, a dielectric loss and a dielectric constant are lower, and dielectric performance is better.

It can be learned from comparison between Table 3 and Table 2 that the first layer 101b of the radome 10 manufactured in this embodiment is formed by weaving the composite material fibers formed by the low melting point PP material and the high melting point PP material, while the radome corresponding to Table 2 is formed by weaving the composite fibers obtained by using the glass fibers and the PP fibers based on the specific weight ratio, and the dielectric constant (2.3) of the PP fiber is lower than the dielectric constant (6.13) of the glass fiber. Therefore, dielectric performance of the PP fiber is better than that of the glass fiber. In addition, the PP fiber has larger elastic deformation and a stronger impact absorption capability. Therefore, impact resistance performance of the PP fiber is better than that of the glass fiber. In this way, in comparison with the radome corresponding to Table 2, the radome corresponding to Table 3 can also have better dielectric performance and impact resistance performance.

The foregoing describes that the composite fibers or the composite material fibers form the prepreg layer in a weaving manner, to obtain the stacked plate 1a shown in the foregoing figure. Then, hot pressing is performed by using the double steel tape or the double Teflon tape, to obtain the composite plate 1b. The prepreg composite plate 1b is heated for softening and hot roll pressing, to obtain the radome shown in FIG. 10. The first layer and the third layer in the stacked plate 1a each are made of a woven object obtained by weaving the composite fibers and the composite material fibers. In another alternative implementation, the first layer and the third layer in the stacked plate 1a each are a composite layer formed by compounding a high melting point fiber-woven object and a PP film. It may be understood that a weaving manner of the high melting point fiber-woven object may be the same as the weaving manner in the foregoing implementation. Details are not described herein again.

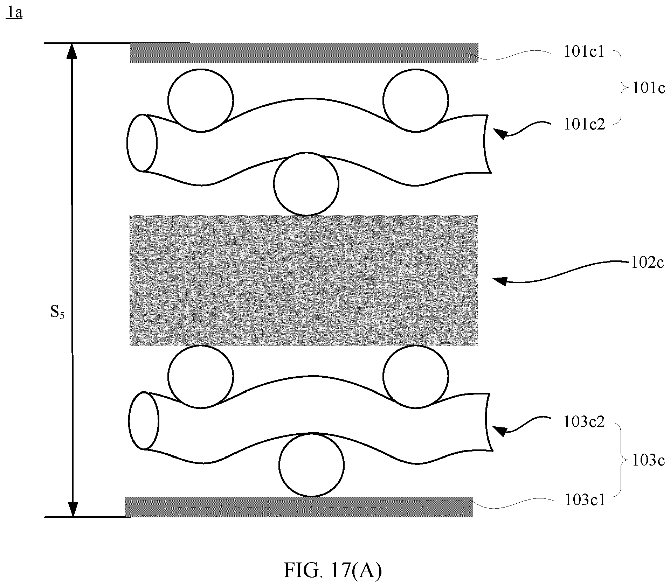

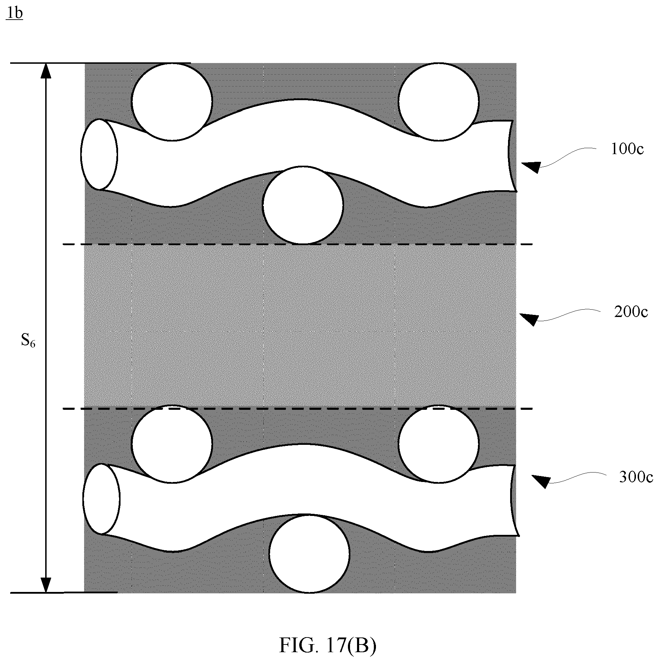

Specifically, FIG. 17(A) is an enlarged view of the Pa area in FIG. 10, and FIG. 17(B) is an enlarged view of the Pb area in FIG. 10. As shown in FIG. 17(A), a stacked plate 1a before molding includes a first layer 101c, a second layer 102c, and a third layer 103c. The first layer 101c, the second layer 102c, and the third layer 103c are sequentially arranged from top to bottom based on an A-type sandwich structure, and the first layer 101c includes a first sublayer 101c1 and a second sublayer 101c2. A white-filled circle represents a glass fiber. The first sublayer 101c1 is made of a layer of PP film, the second sublayer 101c2 is made of a glass fiber-woven object obtained through weaving, and the second layer 102c is made of a PP foam material. In this case, a thickness of the stacked plate 1a is S₅. The third layer 103c is similar to the first layer 101c. Details are not described herein again.

In some embodiments, the first sublayer 101c1 and the second sublayer 101c2 form the first layer 101c based on a weight ratio of 40:60, and a grammage of the second sublayer 101c2 is 400 g/m².

In some embodiments, a density of the second layer 102c is 0.4 g/cm³, and a thickness of the second layer 102c is 1 mm.

Then, hot pressing and compounding are performed, by using a double steel tape at a temperature ranging from 170°C to 240°C, on the first sublayer 101c1, the second sublayer 101c2, the second layer 102c, and the third layer 103c that are arranged based on the structure shown in FIG. 17(A), and then room temperature cooling is performed, to obtain a composite plate 1b shown in FIG. 17(B). It can be learned from FIG. 17(B) that the PP film in the first sublayer 101c1 is melted into liquid, the glass fibers in the second sublayer 101c2 remain in a woven state, and the liquid PP material obtained through melting is filled between the glass fibers in the glass fiber-woven object in the second sublayer 101c2. In addition, because hot pressing is performed, and the first sublayer 101c1 is melted into liquid, a thickness of the composite plate 1b is S₆, and it is not difficult to understand that S₆ is less than S₅.

Then, the composite plate 1b is heated for roll pressing or compression molding. Specifically, the composite plate 1b is continually heated at 190°C to 240°C for 1 min to 3 min for softening, and then roll pressing or compression molding is performed to obtain the radome 10 shown in FIG. 10.

Characteristics of the radome manufactured by using the composite plate 1b are shown in the following Table 4.

**Table 4**

| Composition of the first layer 101c (or the third layer 103c) | | Composite layer formed by the glass fiber-woven object and the PP film based on a weight ratio of 60:40 |
|---|---|---|
| Impact of a falling hammer on the radome (1.3 m) | | > 2.65 kg |
| Lightweight of the radome (density*thickness) | | 0.42 A (1.0*2) |
| Dielectric characteristic of the radome | DK | 3.0 |
| | Df | 0.006 |

The first layer 101c of the radome in this embodiment is formed by the glass fiber-woven object and the PP film. After being melted through hot pressing, the PP film is filled between the glass fibers in the glass fiber-woven object, to form a more compact first surface layer 100c. Therefore, impact resistance performance of the radome in this embodiment is better than those of the radomes manufactured by using the materials corresponding to Table 1 and Table 2.

It can be learned from comparison between Table 4 and Table 1 as follows: First, the surface layer of the radome in this embodiment is formed by the glass fiber-woven object and the PP film, and when thicknesses of the surface layers are the same, a glass fiber content of the surface layer of the radome in this embodiment is lower than the glass fiber content of the fiberglass in Table 1, and a dielectric constant (2.3) and a dielectric loss (0.002) of PP resin are lower than the dielectric constant (4.8) and the dielectric loss (0.03) of the fiberglass in Table 1. Therefore, the radome in this embodiment has better dielectric performance. Second, the glass fiber in the first surface layer 100c of the radome in this embodiment is in a woven state, and in comparison with the unidirectional glass fiber yarn used for the fiberglass radome in Table 1, as shown above, the woven structure can better transfer and dissipate stress than the unidirectional structure. Therefore, the surface layer of the radome in this embodiment has better impact resistance performance, and falling hammer impact that can be resisted is increased and may up to more than 2.65 kg (for example, a value such as 3 kg, 4 kg, or the like).

It can be learned from FIG. 17(A) and FIG. 17(B) that there may be two layers of PP films, one layer is located on a side that is of the first layer and that faces away from the second layer, and the other layer is located on a side that is of the third layer and that faces away from the second layer. In another alternative implementation, there may be four layers of PP films, two layers are respectively located on two sides: one side that is of the first layer and that faces away from the second layer and one side that is of the first layer and that faces the second layer, and the other two layers are respectively located on two sides: one side that is of the third layer and that faces away from the second layer and one side that is of the third layer and that faces the second layer.

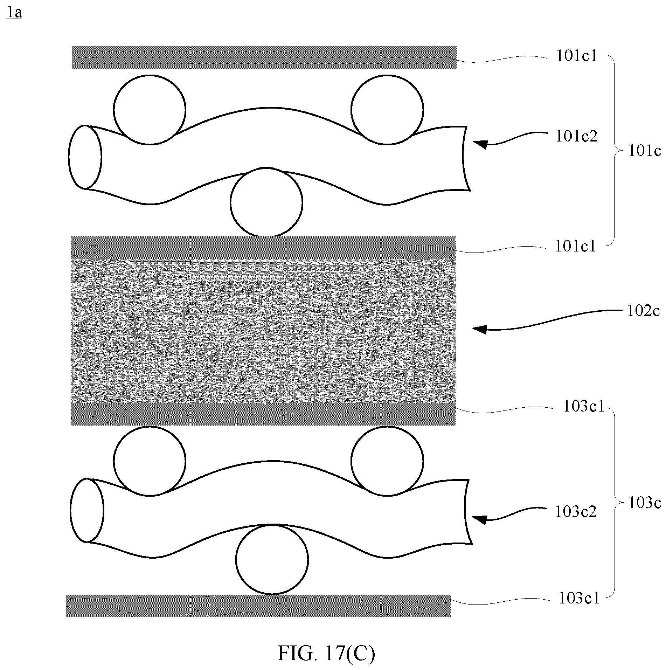

Specifically, FIG. 17(C) is another enlarged view of the Pa area in FIG. 10. As shown in FIG. 17(C), a stacked plate 1a before molding includes a first layer 101c, a second layer 102c, and a third layer 103c. The first layer 101c includes a first sublayer 101c1, a second sublayer 101c2, and a first sublayer 101c1 that are sequentially stacked. The first sublayer 101c1 and the third sublayer 101c1 each are made of a PP film, and the second sublayer 101c2 is made of a glass fiber-woven object.

In comparison with the structure shown in FIG. 17(A), in FIG. 17(C), only a quantity and a material of sublayers forming the first layer 101c are different. To be specific, in FIG. 17(C), there are three sublayers forming the first layer 101c, and a structure is that the first sublayer formed by the PP film is added below the second sublayer 101c2.

Further, to improve impact resistance performance of the radome 10, in some embodiments, inorganic fibers may be woven into a woven object, and then a layer of thermoplastic resin film is added above a layer formed by weaving the inorganic fibers, to form a prepreg layer. When hot pressing is performed on the prepreg layer, the thermoplastic resin film in the prepreg layer is melted into liquid, and then is impregnated in the woven thin layer formed by weaving the inorganic fibers, to form a first surface layer 100d. It may be understood that such a design not only enables the inorganic fibers and the thermoplastic resin to be more closely combined, but also improves impact resistance performance of the surface layer of the radome.

In another alternative implementation, the prepreg layer may alternatively be pre-formed by using a PP film and a high melting point fiber-woven object.

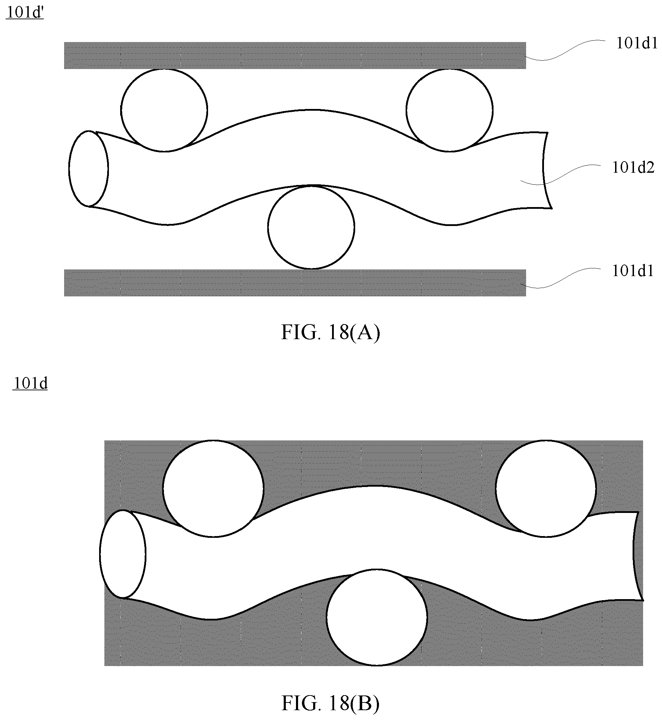

FIG. 18(A) is a partial enlarged view of a structure, in the Pa area in FIG. 10, of the first surface layer 100d before molding, and FIG. 18(B) is a partial enlarged view of a structure, in the Pa area in FIG. 10, of the first surface layer 100d after preliminary molding. As shown in FIG. 18(A) and FIG. 18(B), the structure of the first surface layer 100d before molding includes a first sublayer 101d1, a second sublayer 101d2, and a third sublayer 101d1 that are sequentially stacked. Before a composite plate 1b is manufactured, the first sublayer 101d1, the second sublayer 101d2, and the third sublayer 101d1 that are sequentially stacked are first manufactured into a first layer 101d. A third layer 103d is similar to the first layer 101d. Details are not described herein again.

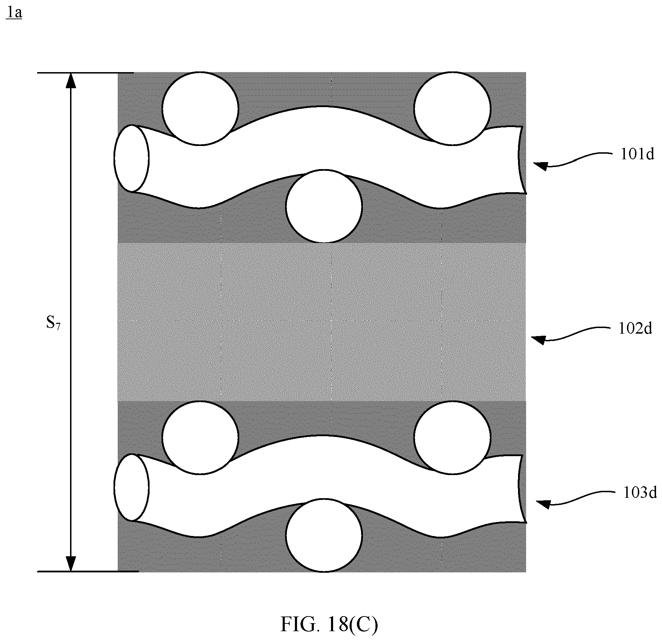

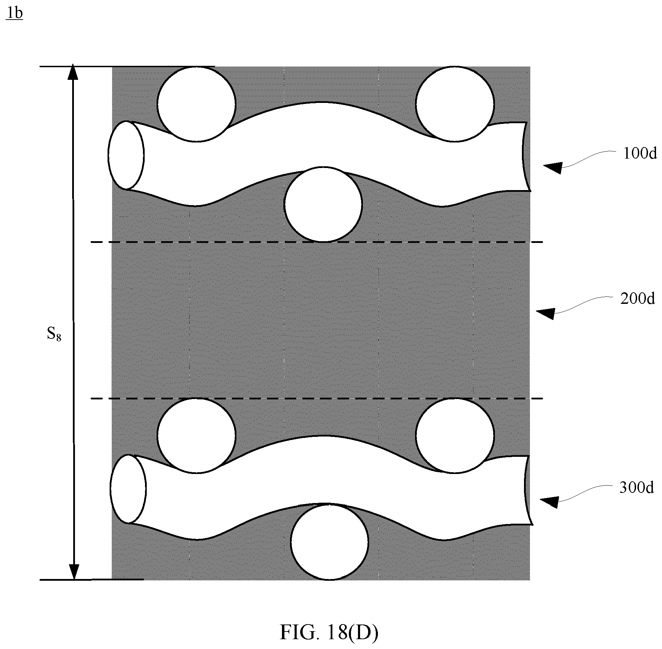

FIG. 18(C) is an enlarged view of the Pa area in FIG. 10, and FIG. 18(D) is an enlarged view of the Pb area in FIG. 10. As shown in FIG. 18(C), a stacked plate 1a before molding includes the first layer 101d, a second layer 102d, and the third layer 103d. The first layer 101d, the second layer 102d, and the third layer 103d are sequentially arranged from top to bottom based on an A-type sandwich structure. In this case, a thickness of the stacked plate 1a is S₇.

Then, hot pressing and compounding are performed, by using a double steel tape at a temperature ranging from 170°C to 240°C, on the first layer 101d, the second layer 102d, and the third layer 103d that are arranged based on the structure shown in FIG. 18(C), and then room temperature cooling is performed, to obtain a composite plate 1b shown in FIG. 18(D). A thickness of the composite plate 1b is S₈ It may be understood that, because the first layer 101d and the third layer 103d have been pre-formed, S₈ is approximately equal to S₇.

Then, the composite plate 1b is heated for roll pressing or compression molding. Specifically, the composite plate 1b is continually heated at 190°C to 240°C for 1 min to 3 min for softening, and then roll pressing or compression molding is performed to obtain the radome 10 shown in FIG. 10.

It is not difficult to find that the foregoing describes that the composite fibers or the composite material fibers are woven into the prepreg layer, to obtain the stacked plate 1a shown in the foregoing figure. Then, hot pressing is performed by using the double steel tape or the double Teflon tape, to obtain a thermoplastic prepreg composite plate 1b. For the stacked plate 1a, the prepreg composite plate 1b is heated for softening and molding, to obtain the radome shown in FIG. 10. The high melting point fibers in the composite plate 1b are in a woven state. In another alternative implementation, the high melting point fibers in the composite plate 1b are arranged in a staggered manner.

It may be understood that, in some embodiments, prepreg tapes may be arranged in a manner of lamination at 0° and 90°, to form the prepreg layer (as shown in FIG. 8(B)). It may be understood that 0° means that an extension direction of the fiber in the prepreg tape is the same as an extension direction of the composite plate, and 90° means that the extension direction of the fiber in the prepreg tape is perpendicular to the extension direction of the composite plate.

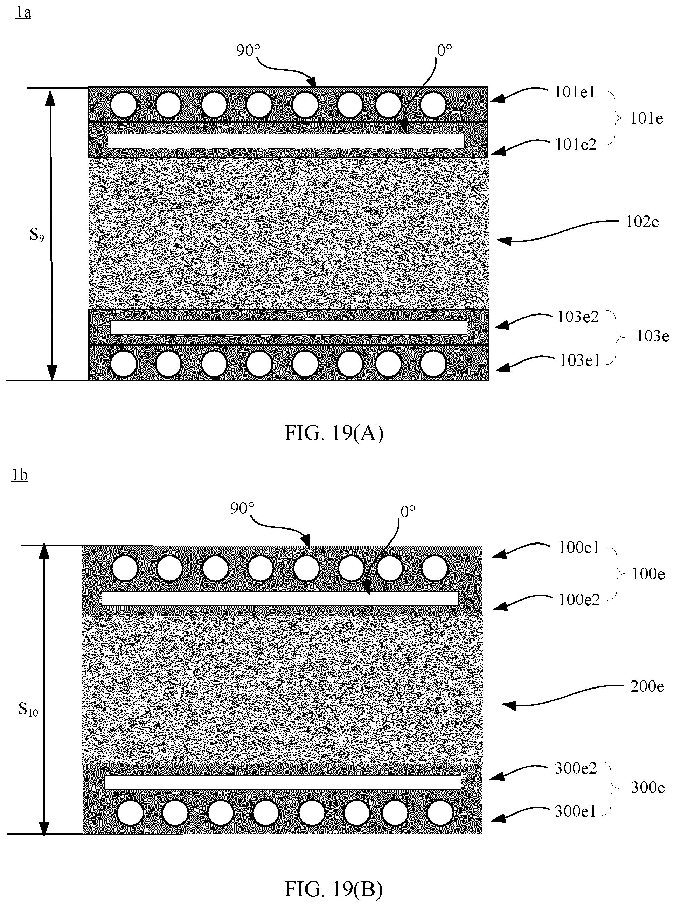

This is described in detail in the following. FIG. 19(A) is an enlarged view of the Pa area in FIG. 10, and FIG. 19(B) is an enlarged view of the Pb area in FIG. 10.

Specifically, as shown in FIG. 19(A), a stacked plate 1a before molding includes a first layer 101e, a second layer 102e, and a third layer 103e. The first layer 101e, the second layer 102e, and the third layer 103e are arranged from top to bottom based on an A-type sandwich structure. The first layer 101e includes a first sublayer 101e1 and a second sublayer 101e2 from top to bottom. Fibers in the first sublayer 101e1 are arranged at 90°, and fibers in the second sublayer 101e2 are arranged at 0°. A fiber in the second layer 102e is made of a PP foam material. The third layer 103e includes a second sublayer 103e2 and a first sublayer 103e1 from top to bottom. Fibers in the first sublayer 101e1 are arranged at 90°, and fibers in the second sublayer 101e2 are arranged at 0°. In this case, a thickness of the stacked plate 1a is S₉.

In another alternative implementation, the first layer 101e includes a first sublayer 101e1 and a second sublayer 101e2 from top to bottom. Fibers in the first sublayer 101e1 are arranged at 0°, and fibers in the second sublayer 101e2 are arranged at 90°. The second layer 102e is made of a PP foam material. The third layer 103e includes a second sublayer 103e2 and a first sublayer 103e1 from top to bottom. Fibers in the first sublayer 101e1 are arranged at 0°, and fibers in the second sublayer 101e2 are arranged at 90°.

After a composite plate 1b is obtained in any one of the foregoing manners, a thickness of the composite plate 1b is S₁₀, and S₁₀ is equal to S₉. The composite plate 1b is heated for roll pressing or compression molding. Specifically, the composite plate 1b is continually heated at 190°C to 240°C for 1 min to 3 min for softening, and then roll pressing or compression molding is performed to obtain the radome 10 shown in FIG. 11.

Characteristics of the radome manufactured by using the composite plate 1b are shown in the following Table 5.

**Table 5**

| Composition of the first layer 101e (or the third layer 103e) | | Structure in which fibers in prepreg tapes are laminated at 0° and 90° |
|---|---|---|
| Impact of a falling hammer on the radome | | > 3 kg |
| Lightweight of the radome (density*thickness) | | 0.4 A (0.95*2) |
| Dielectric characteristic of the radome | DK | 3.05 |
| | Df | 0.0055 |

The material and structure used for the radome 10 in this embodiment are similar to those of the radome 10 in the foregoing embodiment. It can be learned from comparison between

Table 5 and Table 1 that impact resistance performance of the radome 10 in this embodiment is significantly improved, impact that can be resisted may be greater than 3 kg (for example, 4 kg, 5 kg, or the like) and is greater than the falling hammer impact 1.3 kg on the fiberglass radome 10', a dielectric constant is lower than the dielectric constant of the radome manufactured by using the material in Table 1, and a dielectric loss is also significantly reduced. Therefore, the radome in this embodiment has better dielectric performance than the fiberglass radome 10'. In addition, because a middle layer 200e uses an organic foam structure, lightweight of the radome in this embodiment is lower than that of the fiberglass radome 10', and is also significantly lower than that of the plastic radome 10' using pure plastic.

It can be learned from comparison between Table 5 and Table 2 that, because the first surface layer 100e in this embodiment is formed by arranging a plurality of layers of prepreg tapes at a specific angle, in comparison with the radome 10 corresponding to Table 2, the radome 10 in this embodiment of this application has better impact resistance performance than the woven object formed by weaving the composite fibers in Table 2.

In some embodiments, composite fibers or composite material fibers may alternatively be arranged in a manner of lamination at 0° and 90°, to form a prepreg layer (not shown in the figure) in which the fibers are arranged in a staggered manner.

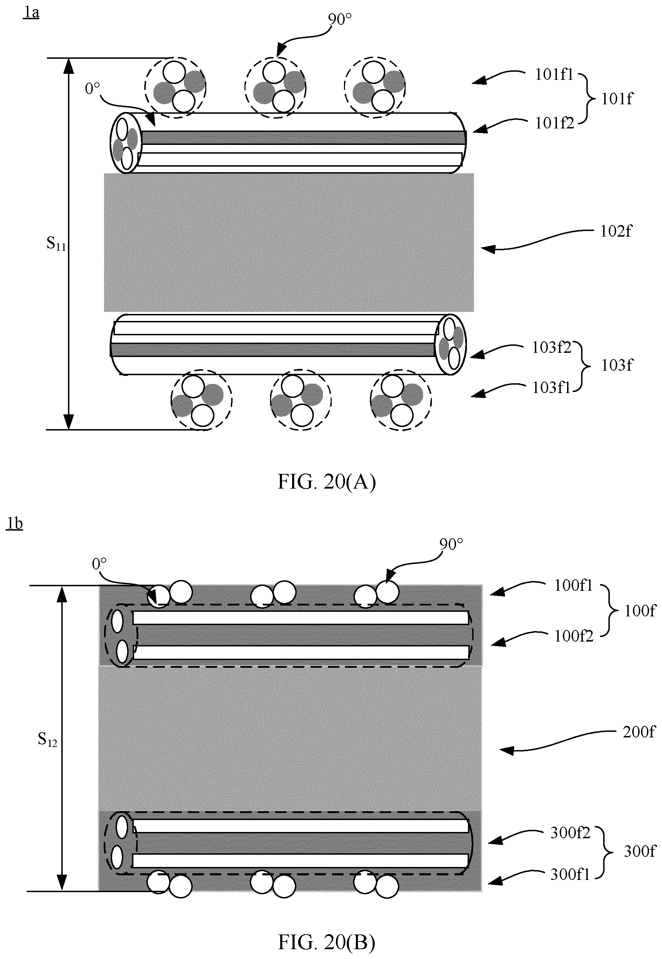

Before this, it should be noted that a difference between an implementation shown in FIG. 20(A) and FIG. 20(B) and the implementation shown in FIG. 19(A) and FIG. 19(B) lies in a manner of forming the prepreg layer. Specifically, the prepreg layer in FIG. 19(A) and FIG. 19(B) is formed by arranging prepreg tapes that are arranged in a staggered manner, while the prepreg layer in FIG. 20(A) and FIG. 20(B) is formed by weaving composite fibers or composite material fibers that are arranged in a staggered manner.

This is described in detail in the following. FIG. 20(A) is an enlarged view of the Pa area in FIG. 10, and FIG. 20(B) is an enlarged view of the Pb area in FIG. 10. Before this, it should be noted that a difference between the following embodiment and the foregoing embodiment in FIG. 11 lies in an arrangement manner of forming the first surface layer 100a. In FIG. 11, the composite fiber formed by the PP fiber and the glass fiber uses an ordered woven structure. In this embodiment, a composite fiber uses an ordered lamination structure, and a direction of a composite fiber in each layer is unidirectional. For example, it is assumed that a two-layer lamination structure is used. In this case, an arrangement direction of a composite fiber in a first layer is a first direction (for example, 0°), and an arrangement direction of a composite fiber in a second layer is a second direction (for example, 90°).

It may be understood that, in some embodiments, the composite fiber may be formed by compounding the PP fiber and the glass fiber in Table 2, or may be formed by compounding the low melting point PP material and the high melting point PP material in Table 3, or may be a prepreg tape formed by compounding the unidirectional glass fiber yarn and the thermoplastic resin. A manner of forming the composite fiber is not limited in this application.

Specifically, as shown in FIG. 20(A), a stacked plate 1a before molding includes a first layer 101f, a second layer 102f, and a third layer 103f. The first layer 101f, the second layer 102f, and the third layer 103f are arranged from top to bottom based on an A-type sandwich structure. The first layer 101f includes a first sublayer 101f1 and a second sublayer 101f2 from top to bottom. Composite fibers in the first sublayer 101f1 are arranged at 90°, and composite fibers in the second sublayer 101f2 are arranged at 0°. A composite fiber in the second layer 102f is made of a PP foam material. The third layer 103f includes a second sublayer 103f2 and a first sublayer 103f1 from top to bottom. Composite fibers in the first sublayer 101f1 are arranged at 90°, and composite fibers in the second sublayer 101f2 are arranged at 0°.

In another alternative implementation, the first layer 101f includes a first sublayer 101f1 and a second sublayer 101f2 from top to bottom. Composite fibers in the first sublayer 101f1 are arranged at 0°, and composite fibers in the second sublayer 101f2 are arranged at 90°. The second layer 102f is made of a PP foam material. The third layer 103f includes a second sublayer 103f2 and a first sublayer 103f1 from top to bottom. Composite fibers in the first sublayer 101f1 are arranged at 0°, and composite fibers in the second sublayer 101f2 are arranged at 90°.

The foregoing materials are laminated based on the A-type sandwich structure to obtain the stacked plate 1a. A thickness of the stacked plate 1a is S₁₁. In some embodiments, a grammage of the first layer 101f is 750 g/m², and a thickness of the first layer 101f is 0.5 mm.

In some embodiments, the PP fiber may alternatively be another organic fiber, for example, at least one of PE, PBT, PET, and PTT.

In some embodiments, to reduce a weight of the radome 10, the second layer 102f of the radome 10 in this embodiment of this application is mainly made of a lightweight filling material. For example, the second layer 102f may be made of at least one of a PP plate, a PE plate, a PBT plate, a PET plate, a PTT plate, a PF plate, a PPO plate, and a lightweight PP glass mat reinforced thermoplastics (glass mat reinforced thermoplastics, GMT) composite plate. A type of the lightweight filling material is not limited in this application.

To further reduce mass of the second layer 102f, the second layer 102f may alternatively use a more lightweight foam material. For example, the second layer 102f may be made of at least one of a PP foam plate, a PE foam plate, a PVF foam plate, a PBT foam plate, a PET foam plate, a PTT foam plate, a PF foam plate, and a PPO foam plate. In some embodiments, a density of the second layer 102f ranges from 0.15 g/m³ to 1.4 g/m³, preferably 0.4 g/m³ to 1.0 g/m³. A thickness of the second layer 102f ranges from 0.5 mm to 3 mm.

In some embodiments, to enable the radome 10 to meet a lightweight requirement, the second layer 102f is made of a PP foam plate. Further, after a plurality of tests are performed by the inventor, when a density of the PP foam plate is 0.4 g/m³, and a thickness of the PP foam plate is 1 mm, lightweight effect of the radome 10 is better.

Then, hot pressing and compounding are continually performed, by using a double steel tape or a double Teflon tape at a temperature ranging from 190°C to 240°C, on the first layer 101f, the second layer 102f, and the third layer 103f that are arranged based on the structure shown in FIG. 20(A), and then room temperature cooling is performed, to obtain a composite plate 1b shown in FIG. 20(B). In this case, a thickness of the composite plate 1b is S₁₂, and it is not difficult to understand that S₁₂ is less than S₁₁.

To improve effect of performing hot pressing on the stacked plate 1a to obtain the composite plate 1b and avoid warping and deformation of the composite plate 1b, in some embodiments, a first surface layer 100f and a second surface layer 300f are symmetric relative to a middle layer 200f. FIG. 20(B) is used as an example. The first surface layer 100f includes a first subsurface layer 100f1 and a second subsurface layer 100f2, and the first subsurface layer 100f1 is disposed on a side that is of the second subsurface layer 100f2 and that is away from the middle layer 200f. The second surface layer 300f includes a first subsurface layer 300f1 and a second subsurface layer 300f2, and the first subsurface layer 300f1 is disposed on a side that is of the second subsurface layer 300f2 and that is away from the middle layer 200f.

An arrangement manner of glass fibers in the first subsurface layer 100f1 and an arrangement manner of glass fibers in the first subsurface layer 300f1 are both 90°, and an arrangement manner of glass fibers in the second subsurface layer 100f2 and an arrangement manner of glass fibers in the second subsurface layer 300f2 are both 0°. Correspondingly, the first layer 101f and the third layer 103f are symmetrically distributed on two sides of the second layer 102f.

In some embodiments, a difference from the foregoing embodiment in which the glass fiber, the composite fiber of the glass fiber and the PP fiber, or the PP fiber is designed to be woven or to be laminated by layer lies in that continuous fibers may alternatively be arranged in an unordered manner, and then form, together with a PP film, a first layer 101g. In comparison with prepreg fabric formed through weaving in a specific order, the first layer 101g in this embodiment also has better effect of transferring and dissipating stress.

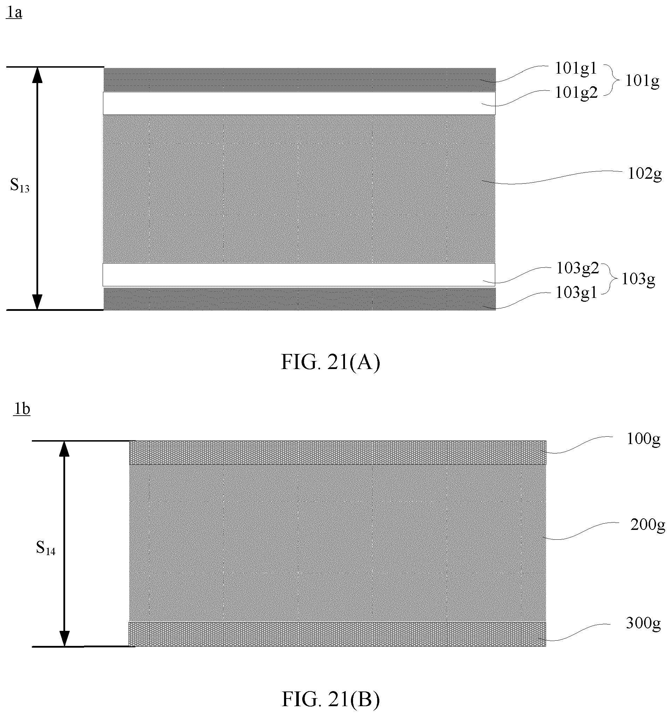

Specifically, as shown in FIG. 21, FIG. 21(A) is an enlarged view of the Pa area in FIG. 10, and FIG. 20(B) is an enlarged view of the Pb area in FIG. 10. As shown in FIG. 21(A), a stacked plate 1a before molding includes the first layer 101g, a second layer 102g, and a third layer 103g. The first layer 101g, the second layer 102g, and the third layer 1013g are sequentially arranged from top to bottom based on an A-type sandwich structure. In addition, the first layer 101g is formed by a first sublayer 101g1 and a second sublayer 101g2. The first sublayer 101g1 is made of a layer of PP film, the second sublayer 101g2 is made of glass mats, and the second layer 102g is made of a PP foam material. In this case, a thickness of the stacked plate 1a is S₁₃.

To enhance impact resistance performance of the radome 10, in some embodiments, a glass fiber content in the first layer 101g is 50%, and a surface density is 450 g/cm³. In some embodiments, a density of the second layer 102g is 0.4 g/cm³, and a thickness of the second layer 102g is 1 mm.

Then, hot pressing and compounding are performed, by using a double steel tape at a temperature ranging from 190°C to 240°C, on the first sublayer 101g1, the second sublayer 101g2, the second layer 102g, and the third layer 103g that are arranged based on the structure shown in FIG. 21(A), and then room temperature cooling is performed, to obtain a composite plate 1b shown in FIG. 21(B). It can be learned from FIG. 21(B) that the PP film in the first sublayer 101g1 is melted into liquid, glass fibers in the second sublayer 101g2 remain in a random distribution state, and the liquid low melting point PP obtained through melting is filled between the glass mats in the second sublayer 101g2. In addition, because hot pressing is performed, and the first sublayer 101g1 is melted into liquid, a thickness of the composite plate 1b is S₁₄, and it is not difficult to understand that S₁₄ is less than S₁₃.

Then, the composite plate 1b is heated for roll pressing or compression molding. Specifically, the composite plate 1b is continually heated at 190°C to 240°C for 1 min to 3 min for softening, and then roll pressing or compression molding is performed to obtain the radome 10 shown in FIG. 10.

Characteristics of the radome manufactured by using the composite plate 1b are shown in the following Table 6.

**Table 6**

| Composition of the first layer 101g (or the third layer 103g) | | Glass mat and PP film, where the glass fiber content is 50% |
|---|---|---|
| Impact of a falling hammer on the radome (1.3 m) | | > 1.8 kg |
| Lightweight of the radome (density*thickness) | | 0.38 A (0.9*2) |
| Dielectric characteristic of the radome | DK | 2.75 |
| | Df | 0.0048 |

It can be learned from comparison between Table 6 and Table 1 that the first layer 101d of the radome in this embodiment is formed by the glass mats and the PP film, and after being melted through hot pressing, the PP film is filled between the glass mats, so that the glass mats are more compact, impact resistance performance of a first surface layer 100g is improved, and falling hammer impact that can be resisted is increased and may up to more than 1.8 kg (for example, 2 kg or 3 kg). In addition, because the glass mat, the PP film, and the PP foam plate are used, in comparison with the weight of the radome manufactured by using the material shown in Table 1, a weight of the radome manufactured in this embodiment of this application is reduced by 62%. Moreover, it can be learned from Table 6 that a dielectric constant (3.0) and a dielectric loss (0.006) of the radome manufactured in this embodiment of this application are lower than the dielectric constant (4.8) and the dielectric loss (0.03) of the fiberglass in Table 1, and therefore, the radome manufactured in this embodiment of this application has better dielectric performance.

It may be understood that, because the radome 10 is exposed outdoors for a long time, there is also a requirement on weather resistance and appearance aesthetics of the radome 10. Therefore, to improve appearance aesthetics of the radome, a weather-resistant coloring layer 104 may be added on the first layer in the stacked plate 1a shown in FIG. 2 to FIG. 10, so that not only appearance aesthetics of the radome can be improved, but also weather resistance of the surface layer of the radome is improved. In addition, in some embodiments, the PP film or the PP fiber and the weather-resistant coloring layer 104 may be integrally designed. For example, in the first layer 101g that is formed by glass fiber plain fabric and the PP film, the PP film may be designed as the weather-resistant coloring layer, and then is tiled on the glass fiber plain fabric, to jointly form the first layer 101g. This is not limited in this application.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be internal communication between two elements or an interaction relationship between two elements. Persons of ordinary skill in the art may understand specific meanings of the foregoing terms in embodiments of this application based on specific cases.

In the specification, claims, and accompanying drawings of embodiments of this application, the terms "first", "second", "third", "fourth", and the like (if existent) are intended to distinguish between similar objects but do not necessarily indicate a specific order or sequence. It may be understood that the data used in such a way is interchangeable in appropriate circumstances, so that embodiments of this application described herein can be implemented in other orders than the order illustrated or described herein. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, product, or device.

Finally, it should be noted that the foregoing embodiments are merely intended for describing the technical solutions of embodiments of this application other than limiting the technical solutions of embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A composite plate used for a radome, wherein the composite plate comprises a middle layer and a surface layer combined with the middle layer, the surface layer comprises first fibers and thermoplastic resin filled between the first fibers, the surface layer and the middle layer are arranged in a first direction, and the first direction is a thickness direction of the composite plate.

2. The composite plate according to claim 1, wherein a melting point of the first fiber is higher than a melting point of the thermoplastic resin.

3. The composite plate according to claim 1, wherein the thermoplastic resin in the surface layer is made of a same material as the middle layer.

4. The composite plate according to claim 1 or 3, wherein the middle layer is made of a thermoplastic foam material.

5. The composite plate according to any one of claims 1 to 4, wherein the first fiber in the surface layer is of a woven fiber structure, and in the surface layer, the thermoplastic resin is filled in a gap in the woven fiber structure.

6. The composite plate according to any one of claims 1 to 5, wherein the first fibers in the surface layer comprise inorganic fibers and/or organic fibers.

7. The composite plate according to claim 6, wherein the inorganic fibers in the surface layer are arranged in an unordered manner.

8. The composite plate according to claim 7, wherein the inorganic fibers in the surface layer are glass fibers, and the glass fibers are arranged in an unordered manner to form a glass mat.

9. The composite plate according to any one of claims 6 to 8, wherein the inorganic fiber in the surface layer comprises at least one of a glass fiber, a basalt fiber, an andesite fiber, an aluminum silicate fiber, a boron nitride fiber, an aluminum oxide fiber, and a quartz fiber.

10. The composite plate according to claim 6, wherein the organic fiber in the surface layer comprises at least one of a polypropylene fiber, a polybutylene terephthalate fiber, a polyethylene fiber, a polyethylene glycol terephthalate fiber, and a polytrimethylene terephthalate fiber.

11. The composite plate according to claim 5, wherein a weaving manner of the woven fiber structure comprises any one of plain weaving, square plain weaving, rib weaving, twill weaving, and satin weaving.

12. The composite plate according to any one of claims 1 to 4, wherein the first fibers in the surface layer comprise a plurality of fiber layers arranged in the first direction, and an included angle between fibers in two fiber layers of the plurality of fiber layers is a first preset angle.

13. The composite plate according to claim 12, wherein the first preset angle comprises at least one of 30°, 45°, and 60°.

14. The composite plate according to any one of claims 1 to 13, wherein the composite plate further comprises a weather-resistant coloring layer, and the weather-resistant coloring layer is located on a side that is of the surface layer and that is away from the middle layer.

15. The composite plate according to any one of claims 1 to 13, wherein the composite plate further comprises a weather-resistant coloring layer, and the weather-resistant coloring layer and the surface layer are integrally formed.

16. The composite plate according to any one of claims 1 to 15, wherein the composite plate is of a sandwich structure, and the sandwich structure is an A-type sandwich structure or a C-type sandwich structure.

17. The composite plate according to any one of claims 1 to 16, wherein the thermoplastic resin comprises at least one of polypropylene, polyethylene, polyvinyl chloride, polybutylene terephthalate, polyethylene glycol terephthalate, polytrimethylene terephthalate, polycarbonate, and polyphenylene oxide.

18. A stacked plate, used to form the composite plate according to any one of claims 1 to 17, wherein the stacked plate comprises at least two first layers and at least one second layer that are stacked, the first layer is formed by compounding first fibers and thermoplastic resin, the at least two first layers and the at least one second layer are arranged in a staggered manner in a second direction, the second direction is a thickness direction of the stacked plate, and the second direction is parallel to the first direction.

19. The stacked plate according to claim 18, wherein the thermoplastic resin comprises second fibers, the first layer comprises a woven structure formed by weaving composite fibers formed by compounding the first fibers and the second fibers, and a melting point of the first fiber is higher than a melting point of the second fiber.

20. The stacked plate according to claim 19, wherein the first fibers comprise inorganic fibers and/or organic fibers.

21. The stacked plate according to claim 18, wherein the first layer comprises a woven structure formed by weaving composite material fibers, wherein the composite material fiber comprises:
a kernel structure, wherein the kernel structure is made of a first organic material; and
a shell structure disposed around the kernel structure, wherein the shell structure is made of a second organic material, and a melting point of the first organic material is higher than a melting point of the second organic material.

22. The stacked plate according to any one of claims 18 to 20, wherein the first fiber in the first layer is a unidirectional continuous fiber, the first layer comprises a plurality of layers of prepreg tapes, the prepreg tape is a unidirectional tape formed after the unidirectional continuous fiber is wrapped by the thermoplastic resin, and an included angle between two layers of prepreg tapes of the plurality of layers of prepreg tapes is a second preset angle.

23. The stacked plate according to any one of claims 18 to 22, wherein the thermoplastic resin comprises a thermoplastic resin film and/or thermoplastic resin powder.

24. A method for manufacturing the composite plate according to any one of claims 1 to 17, wherein the method comprises: continually performing hot pressing on the first layer and the second layer in the stacked plate according to any one of claims 18 to 23 by using a double steel tape or a double Teflon tape at a preset temperature, to form the composite plate through compounding.

25. A method for manufacturing the composite plate according to any one of claims 1 to 17, wherein the method comprises:
performing hot pressing on the first layer in the stacked plate according to any one of claims 18 to 23 by using a double steel tape or a double Teflon tape at a preset temperature, to form a third layer; and
stacking the third layer and the second layer in a staggered manner, and performing hot pressing, by using the double steel tape or the double Teflon tape at the preset temperature, on the third layer and the second layer that are stacked in a staggered manner, to form the composite plate through compounding.

26. A radome, wherein the radome is manufactured by using the composite plate according to any one of claims 1 to 17 through hot pressing or compression molding, wherein the radome comprises a middle layer and a surface layer combined with the middle layer, and the surface layer comprises first fibers and thermoplastic resin filled between the first fibers.

27. The radome according to claim 26, wherein the thermoplastic resin in the surface layer is made of a same material as the middle layer.

28. The radome according to claim 26 or 27, wherein the middle layer is made of a thermoplastic foam material.

29. The radome according to any one of claims 26 to 28, wherein the radome uses a sandwich structure, and the sandwich structure is an A-type sandwich structure or a C-type sandwich structure.

30. A radome, wherein the radome is manufactured by using the stacked plate according to any one of claims 18 to 23, and a method for manufacturing the radome comprises:
continually performing hot pressing on the stacked plate according to any one of claims 18 to 23 by using a double steel tape or a double Teflon tape at a preset temperature, to form a composite plate through compounding; and
performing hot pressing or compression molding on the composite plate to manufacture the radome, wherein the radome comprises a middle layer and a surface layer combined with the middle layer, and the surface layer comprises first fibers and thermoplastic resin filled between the first fibers.
